(19) **Europäisches Patentamt / European Patent Office / Office européen des brevets**

(11) **EP 4 518 219 A1**

(12) **EUROPEAN PATENT APPLICATION**
published in accordance with Art. 153(4) EPC

(43) Date of publication:
**05.03.2025 Bulletin 2025/10**

(21) Application number: **23794788.2**

(22) Date of filing: **09.03.2023**

(51) International Patent Classification (IPC):
**H04L 5/00** (2006.01)

(52) Cooperative Patent Classification (CPC):
**H04L 5/00; H04W 24/10**

(86) International application number:
**PCT/CN2023/080434**

(87) International publication number:
**WO 2023/207352 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.04.2022 CN 202210474687**

(71) Applicant: **Datang Mobile Communications Equipment Co., Ltd.**
**Beijing 100085 (CN)**

(72) Inventors:
- **FEI, Yongqiang**
  **Beijing 100085 (CN)**
- **GAO, Qiubin**
  **Beijing 100085 (CN)**

(74) Representative: **Studio Torta S.p.A.**
**Via Viotti, 9**
**10121 Torino (IT)**

(54) **MEASUREMENT FEEDBACK METHOD AND APPARATUS, AND STORAGE MEDIUM**

(57) Provided in the embodiments of the present disclosure are a measurement feedback method and apparatus, and a storage medium. The method comprises: determining at least one first resource set and at least one AI model, which has an association relationship with the at least one first resource set, wherein the first resource set is a measurement resource set; and determining feedback information on the basis of the at least one first resource set and the at least one AI model, and sending the feedback information to a network device, wherein the feedback information comprises some or all output information of the at least one AI model. In the present disclosure, at least one first resource set, which needs reasoning performed, and at least one AI model, which has an association relationship with the at least one first resource set, are determined, and reasoning is performed by using the at least one first resource set and the at least one AI model, which are associated with each other, so as to obtain feedback information. By means of the AI model, the measurement and management precision are improved, the measurement overheads of measurement resources are reduced, and the measurement period is shortened.

Determining at least one first resource set and at least one AI model that having an association relationship with the at least one first resource set, where the first resource set is a measurement resource set — 201

Determining report information based on the at least one first resource set and the at least one AI model, and transmitting the report information to a network device, where the report information includes part or all of output information of the at least one AI model — 202

FIG. 2

EP 4 518 219 A1

**Description**

CROSS-REFERENCES TO RELATED APPLICATIONS

The present application claims priority to Chinese patent application No. 2022104746877 filed on April 29, 2022, entitled "Measurement Feedback Method and Apparatus, and Storage Medium", which is hereby incorporated by reference in its entirety.

FIELD

The present application relates to the field of communications, and in particular, to methods and apparatuses for measurement report, and a storage medium.

BACKGROUND

In the new radio (NR) system, due to the complexity and time-varying characteristics of the radio channel, a terminal (user equipment, UE) generally needs to perform channel measurement to obtain channel state information (CSI), etc., and report the CSI and other feedback information to a network device, and the network device may better perform resource scheduling based on the CSI and other feedback information reported by the UE.

Traditionally, in case of performing channel measurement and measurement report, the principle is to report the information of the measured object and not report the information of the unmeasured object, which results in that the measurement accuracy is low and the measurement overhead is high. In addition, the report content is limited to the measurement result of the measurement resources in the measured object. For the measurement resources not included in the measured object, the feedback information does not contain their relevant information.

BRIEF SUMMARY

In response to the problems in the related art, embodiments of the present application provide methods and apparatuses for measurement report, and a storage medium.

An embodiment of the present application provides a method for measurement report, including:

determining at least one first resource set and at least one artificial intelligence (AI) model having an association relationship with the at least one first resource set, where the first resource set is a measurement resource set; and determining report information based on the at least one first resource set and the at least one AI model, and transmitting the report information to a network device, where the report information includes part or all of output information of the at least one AI model.

In an embodiment, the association relationship is determined based on at least one of the following:

an index of the at least one first resource set and an index of the at least one AI model are included in same report configuration information;

an index of the at least one first resource set and an index of the at least one AI model satisfy a given relationship; or,

an index of the at least one first resource set and an index of the at least one AI model are indicated by same association indication information.

In an embodiment, a quantity of the at least one first resource set is $N$, a quantity of the at least one AI model is $M$, $N$ and $M$ are both positive integers, and the association relationship includes:

if $N$ is greater than $M$, an $i$-th AI model is associated with first resource sets numbered $\left\lfloor \frac{N}{M} \right\rfloor \cdot i, \left\lfloor \frac{N}{M} \right\rfloor \cdot i + 1, ..., \left\lfloor \frac{N}{M} \right\rfloor \cdot (i+1) - 1$, or associated with first resource sets numbered $\left\lceil \frac{N}{M} \right\rceil$.

$$i, \left\lceil \frac{N}{M} \right\rceil \cdot i + 1, , ..., \left\lceil \frac{N}{M} \right\rceil \cdot (i+1) - 1;$$

if $N$ is equal to $M$, an $i$-th AI model is associated with an $i$-th first resource set;

if $N$ is less than $M$, an $i$-th first resource set is associated with AI models numbered $\left\lceil \frac{M}{N} \right\rceil$.

$$i, \left\lceil \frac{M}{N} \right\rceil \cdot i + 1, ..., \left\lceil \frac{M}{N} \right\rceil \cdot (i + 1) - 1$$, or associated with AI models numbered

$$\left\lfloor \frac{M}{N} \right\rfloor \cdot i, \left\lfloor \frac{M}{N} \right\rfloor \cdot i + 1, ..., \left\lfloor \frac{M}{N} \right\rfloor \cdot (i + 1) - 1$$;

or,

if $N$ is greater than $M$, an AI model with index $j$ is associated with first resource sets with indexes of

$$\left\lfloor \frac{N}{M} \right\rfloor \cdot j, \left\lfloor \frac{N}{M} \right\rfloor \cdot j + 1, ..., \left\lfloor \frac{N}{M} \right\rfloor \cdot (j + 1) - 1$$, or associated with first resource sets with indexes of

$$\left\lceil \frac{N}{M} \right\rceil \cdot j, \left\lceil \frac{N}{M} \right\rceil \cdot j + 1, ..., \left\lceil \frac{N}{M} \right\rceil \cdot (j + 1) - 1$$;

if $N$ is equal to $M$, an AI model with index $j$ is associated with a first resource set with index $j$;

if $N$ is less than $M$, a first resource set with index $j$ is associated with AI models with indexes of

$$\left\lfloor \frac{M}{N} \right\rfloor \cdot j, \left\lfloor \frac{M}{N} \right\rfloor \cdot j + 1, ..., \left\lfloor \frac{M}{N} \right\rfloor \cdot (j + 1) - 1$$, or associated with AI models with indexes of

$$\left\lceil \frac{M}{N} \right\rceil \cdot j, \left\lceil \frac{M}{N} \right\rceil \cdot j + 1, ..., \left\lceil \frac{M}{N} \right\rceil \cdot (j + 1) - 1$$;

where ⌈ ⌉ indicates rounding up, ⌊ ⌋ indicates rounding down, $i$ is an integer from 1 to $M$, and $j$ is an integer from 0 to $M$-1.

In an embodiment, the association indication information is used to indicate indexes of one or more AI models associated with each first resource set, and/or the association indication information is used to indicate one or more first resource sets associated with each AI model.

In an embodiment, determining the report information based on the at least one first resource set and the at least one AI model includes:

determining the report information based on the at least one first resource set and one or more AI models in the at least one AI model.

In an embodiment, determining the report information includes:

determining the report information based on the at least one first resource set and one AI model in the at least one AI model, where an input of the one AI model includes part or all of first resource sets in the at least one first resource set, the report information includes part or all of output information of the one AI model, the one AI model is selected by a terminal device or determined based on model indication information, or the one AI model is the only AI model included in the at least one AI model; or,

determining the report information based on the at least one first resource set and multiple AI models in the at least one AI model, where an input of each AI model among the multiple AI models includes part or all of first resource sets in the at least one first resource set, and the report information includes part or all of output information of the each AI model; or, an input of a first AI model among the multiple AI models includes part or all of first resource sets in the at least one first resource set, an input of an $(m + n)$-th AI model includes part or all of output information of an $m$-th to an $(m + n - 1)$-th AI models, and the report information includes part or all of output information of a last AI model among the multiple AI models, m = 1, 2,...M-1, $n$ is a predefined or configured positive integer, $m + n$ is an integer from 2 to $M$, and M is a quantity of the multiple AI models.

In an embodiment, the model indication information and/or the input information and the output information of each AI model is determined based on at least one of the following:

pre-definition in a protocol;

a radio resource control (RRC) message configuration;

a media access control - control element (MAC CE) indication; or

a downlink control information (DCI) indication.

In an embodiment, the output information of the AI model in the report information includes at least one of the following:

first channel state information of the first resource set;

second channel state information of a second resource set, where the second resource set corresponds to the output information of the AI model in the report information;

identifiers of part of output layer nodes of the AI model and/or output values of the part of output layer nodes, where the identifiers and/or output values of the part of output layer nodes satisfy a given condition; or

output values of all of output layer nodes of the AI model.

In an embodiment, the second resource set is different from the first resource set in at least one of the following:

a type of resource set is different;

a type of reference signal is different;

a reference signal is different;

a time domain resource for transmission is different;

a frequency domain resource for transmission is different;

a transmission port is different;

a transmission beam is different;

a reception beam is different;

the first resource set and the second resource set are independently configured; or,

the first resource set is a subset of the second resource set.

In an embodiment, the second channel state information of the second resource set includes at least one of the following:

identifiers of $K$ resources satisfying the given condition in the second resource set;

confidence or probability corresponding to $K$ resources;

inference reference signal received power (RSRP) corresponding to $K$ resources;

inference reference signal received quality (RSRQ) corresponding to $K$ resources; or,

inference signal to interference and noise ratio (SINR) corresponding to $K$ resources;

where $K$ is a predefined or configured positive integer, and a value of $K$ does not exceed a quantity of the second resource sets.

In an embodiment, the first channel state information of the first resource set includes at least one of the following:

a channel estimation result obtained based on the at least one first resource set;

channel estimation result compression information obtained based on the at least one first resource set;

a channel estimation result and channel estimation result compression information obtained based on the at least one first resource set; or,

information for channel estimation or channel recovery corresponding to a resource in the first resource set.

In an embodiment, the output information of the AI model included in the report information is quantized and/or encoded information.

An embodiment of the present application further provides a method for measurement report, including: receiving report information transmitted from a terminal device, where the report information is determined based on at least one first resource set and at least one artificial intelligence (AI) model, the at least one first resource set and the at least one AI model have an association relationship, the report information includes part or all of output information of the at least one AI model, and the first resource set is a measurement resource set.

In an embodiment, the association relationship is determined based on at least one of the following:

an index of the at least one first resource set and an index of the at least one AI model are included in same report configuration information;

an index of the at least one first resource set and an index of the at least one AI model satisfy a given relationship; or,

an index of the at least one first resource set and an index of the at least one AI model are indicated by same association indication information.

In an embodiment, a quantity of the at least one first resource set is $N$, a quantity of the at least one AI model is $M$, $N$ and $M$ are both positive integers, and the association relationship includes:

if $N$ is greater than $M$, an $i$-th AI model is associated with first resource sets numbered $\left\lfloor \frac{N}{M} \right\rfloor \cdot i, \left\lfloor \frac{N}{M} \right\rfloor \cdot i + 1, ..., \left\lfloor \frac{N}{M} \right\rfloor \cdot (i+1) - 1$, or associated with first resource sets numbered $\left\lceil \frac{N}{M} \right\rceil$ . $i, \left\lceil \frac{N}{M} \right\rceil \cdot i + 1, ..., \left\lceil \frac{N}{M} \right\rceil \cdot (i+1) - 1$;

if $N$ is equal to $M$, an $i$-th AI model is associated with an $i$-th first resource set;

if $N$ is less than $M$, an $i$-th first resource set is associated with AI models numbered $\left\lfloor \frac{M}{N} \right\rfloor$ . $i, \left\lfloor \frac{M}{N} \right\rfloor \cdot i + 1, ..., \left\lfloor \frac{M}{N} \right\rfloor \cdot (i+1) - 1$, or associated with AI models numbered $\left\lceil \frac{M}{N} \right\rceil \cdot i, \left\lceil \frac{M}{N} \right\rceil \cdot i + 1, ..., \left\lceil \frac{M}{N} \right\rceil \cdot (i+1) - 1$; or,

if $N$ is greater than $M$, an AI model with index j is associated with first resource sets with indexes of $\left\lfloor \frac{N}{M} \right\rfloor \cdot j, \left\lfloor \frac{N}{M} \right\rfloor \cdot j + 1, ..., \left\lfloor \frac{N}{M} \right\rfloor \cdot (j+1) - 1$, or associated with first resource sets with indexes of $\left\lceil \frac{N}{M} \right\rceil \cdot j, \left\lceil \frac{N}{M} \right\rceil \cdot j + 1, ..., \left\lceil \frac{N}{M} \right\rceil \cdot (j+1) - 1$;

if $N$ is equal to $M$, an AI model with index $j$ is associated with a first resource set with index $j$;

if $N$ is less than $M$, a first resource set with index $j$ is associated with AI models with indexes of $\left\lfloor \frac{M}{N} \right\rfloor \cdot j, \left\lfloor \frac{M}{N} \right\rfloor \cdot j + 1, ..., \left\lfloor \frac{M}{N} \right\rfloor \cdot (j+1) - 1$, or associated with AI models with indexes of

$$\left\lceil \tfrac{M}{N} \right\rceil \cdot j, \left\lceil \tfrac{M}{N} \right\rceil \cdot j + 1, ..., \left\lceil \tfrac{M}{N} \right\rceil \cdot (j+1) - 1$$

where $\lceil \rceil$ indicates rounding up, $\lfloor \rfloor$ indicates rounding down, $i$ is an integer from 1 to $M$, and $j$ is an integer from 0 to $M-1$.

In an embodiment, the association indication information is used to indicate indexes of one or more AI models associated with each first resource set, and/or the association indication information is used to indicate one or more first resource sets associated with each AI model.

In an embodiment, determining the report information based on the at least one first resource set and the at least one AI model includes:
determining the report information based on the at least one first resource set and one or more AI models in the at least one AI model.

In an embodiment, determining the report information includes:

determining the report information based on the at least one first resource set and one AI model in the at least one AI model, where an input of the one AI model includes part or all of first resource sets in the at least one first resource set, the report information includes part or all of output information of the one AI model, the one AI model is selected by the terminal device or determined based on model indication information, or the one AI model is the only AI model included in the at least one AI model; or,

determining the report information based on the at least one first resource set and multiple AI models in the at least one AI model, where an input of each AI model among the multiple AI models includes part or all of first resource sets in the at least one first resource set, and the report information includes part or all of output information of the each AI model; or, an input of a first AI model among the multiple AI models includes part or all of first resource sets in the at least one first resource set, an input of an *(m + n)-th* AI model includes part or all of output information of an *m-th* to an *(m + n - 1)-th* AI models, and the report information includes part or all of output information of a last AI model among the multiple AI models, m = *1, 2,...M-1*, *n* is a predefined or configured positive integer, *m + n* is an integer from 2 to *M,* and *M* is a quantity of the multiple AI models.

In an embodiment, the model indication information and/or the input information and the output information of each AI model is determined based on at least one of the following:

pre-definition in a protocol;

a radio resource control (RRC) message configuration;

a media access control - control element (MAC CE) indication; or

a downlink control information (DCI) indication.

In an embodiment, the output information of the AI model in the report information includes at least one of the following:

first channel state information of the first resource set;

second channel state information of a second resource set, where the second resource set corresponds to the output information of the AI model in the report information;

identifiers of part of output layer nodes of the AI model and/or output values of the part of output layer nodes, where the identifiers and/or output values of the part of output layer nodes satisfy a given condition; or

output values of all of output layer nodes of the AI model.

In an embodiment, the second resource set is different from the first resource set in at least one of the following:

a type of resource set is different;

a type of reference signal is different;

a reference signal is different;

a time domain resource for transmission is different;

a frequency domain resource for transmission is different;

a transmission port is different;

a transmission beam is different;

a reception beam is different;

the first resource set and the second resource set are independently configured; or,

the first resource set is a subset of the second resource set.

In an embodiment, the second channel state information of the second resource set includes at least one of the following:

identifiers of $K$ resources satisfying the given condition in the second resource set;

confidence or probability corresponding to $K$ resources;

inference reference signal received power (RSRP) corresponding to $K$ resources;

inference reference signal received quality (RSRQ) corresponding to $K$ resources; or,

inference signal to interference and noise ratio (SINR) corresponding to $K$ resources;

where $K$ is a predefined or configured positive integer, and a value of $K$ does not exceed a quantity of the second resource sets.

In an embodiment, the first channel state information of the first resource set includes at least one of the following:

a channel estimation result obtained based on the at least one first resource set;

channel estimation result compression information obtained based on the at least one first resource set;

a channel estimation result and channel estimation result compression information obtained based on the at least one first resource set; or,

information for channel estimation or channel recovery corresponding to a resource in the first resource set.

In an embodiment, the output information of the AI model included in the report information is quantized and/or encoded information.

An embodiment of the present application further provides a terminal device, including a memory, a transceiver and a processor,

where the memory is used for storing a computer program, the transceiver is used for transmitting and receiving data under control of the processor, and the processor is used for reading the computer program in the memory and performing the following operations:

determining at least one first resource set and at least one artificial intelligence (AI) model having an association relationship with the at least one first resource set, where the first resource set is a measurement resource set; and

determining report information based on the at least one first resource set and the at least one AI model, and transmitting the report information to a network device, where the report information includes part or all of output information of the at least one AI model.

In an embodiment, the association relationship is determined based on at least one of the following:

an index of the at least one first resource set and an index of the at least one AI model are included in same report configuration information;

an index of the at least one first resource set and an index of the at least one AI model satisfy a given relationship; or,

an index of the at least one first resource set and an index of the at least one AI model are indicated by same association indication information.

In an embodiment, a quantity of the at least one first resource set is *N*, a quantity of the at least one AI model is *M*, *N* and *M* are both positive integers, and the association relationship includes:

if *N* is greater than *M*, an *i-th* AI model is associated with first resource sets numbered $\left\lfloor \frac{N}{M} \right\rfloor \cdot i, \left\lfloor \frac{N}{M} \right\rfloor \cdot i + 1, ..., \left\lfloor \frac{N}{M} \right\rfloor \cdot (i+1) - 1$, or associated with first resource sets numbered $\left\lceil \frac{N}{M} \right\rceil \cdot i, \left\lceil \frac{N}{M} \right\rceil \cdot i + 1, ..., \left\lceil \frac{N}{M} \right\rceil \cdot (i+1) - 1$;

if *N* is equal to *M*, an *i-th* AI model is associated with an *i-th* first resource set;

if *N* is less than *M*, an *i-th* first resource set is associated with AI models numbered $\left\lfloor \frac{M}{N} \right\rfloor \cdot i, \left\lfloor \frac{M}{N} \right\rfloor \cdot i + 1, ..., \left\lfloor \frac{M}{N} \right\rfloor \cdot (i+1) - 1$, or associated with AI models numbered $\left\lceil \frac{M}{N} \right\rceil \cdot i, \left\lceil \frac{M}{N} \right\rceil \cdot i + 1, ..., \left\lceil \frac{M}{N} \right\rceil \cdot (i+1) - 1$; or,

if *N* is greater than *M*, an AI model with index *j* is associated with first resource sets with indexes of $\left\lfloor \frac{N}{M} \right\rfloor \cdot j, \left\lfloor \frac{N}{M} \right\rfloor \cdot j + 1, ..., \left\lfloor \frac{N}{M} \right\rfloor \cdot (j+1) - 1$, or associated with first resource sets with indexes of $\left\lceil \frac{N}{M} \right\rceil \cdot j, \left\lceil \frac{N}{M} \right\rceil \cdot j + 1, ..., \left\lceil \frac{N}{M} \right\rceil \cdot (j+1) - 1$;

if *N* is equal to *M*, an AI model with index *j* is associated with a first resource set with index *j*;

if *N* is less than *M*, a first resource set with index *j* is associated with AI models with indexes of $\left\lfloor \frac{M}{N} \right\rfloor \cdot j, \left\lfloor \frac{M}{N} \right\rfloor \cdot j + 1, ..., \left\lfloor \frac{M}{N} \right\rfloor \cdot (j+1) - 1$, or associated with AI models with indexes of $\left\lceil \frac{M}{N} \right\rceil \cdot j, \left\lceil \frac{M}{N} \right\rceil \cdot j + 1, ..., \left\lceil \frac{M}{N} \right\rceil \cdot (j+1) - 1$;

where ⌈ ⌉ indicates rounding up, ⌊ ⌋ indicates rounding down, *i* is an integer from 1 to *M*, and *j* is an integer from 0 to *M-1*.

In an embodiment, the association indication information is used to indicate indexes of one or more AI models associated with each first resource set, and/or the association indication information is used to indicate one or more first resource sets associated with each AI model.

In an embodiment, determining the report information based on the at least one first resource set and the at least one AI model includes:
determining the report information based on the at least one first resource set and one or more AI models in the at least one AI model.

In an embodiment, determining the report information includes:

determining the report information based on the at least one first resource set and one AI model in the at least one AI model, where an input of the one AI model includes part or all of first resource sets in the at least one first resource set, the report information includes part or all of output information of the one AI model, the one AI model is selected by the terminal device or determined based on model indication information, or the one AI model is the only AI model included in the at least one AI model; or,

determining the report information based on the at least one first resource set and multiple AI models in the at least one AI model, where an input of each AI model among the multiple AI models includes part or all of first resource sets in the at least one first resource set, and the report information includes part or all of output information of the each AI model; or, an input of a first AI model among the multiple AI models includes part or all of first resource sets in the at least one first resource set, an input of an $(m + n)$-th AI model includes part or all of output information of an $m$-th to an $(m + n - 1)$-th AI models, and the report information includes part or all of output information of a last AI model among the multiple AI models, m = $1, 2,...M-1$, $n$ is a predefined or configured positive integer, $m + n$ is an integer from 2 to $M$, and M is a quantity of the multiple AI models.

In an embodiment, the model indication information and/or the input information and the output information of each AI model is determined based on at least one of the following:

pre-definition in a protocol;

a radio resource control (RRC) message configuration;

a media access control - control element (MAC CE) indication; or

a downlink control information (DCI) indication.

In an embodiment, the output information of the AI model in the report information includes at least one of the following:

first channel state information of the first resource set;

second channel state information of a second resource set, where the second resource set corresponds to the output information of the AI model in the report information;

identifiers of part of output layer nodes of the AI model and/or output values of the part of output layer nodes, where the identifiers and/or output values of the part of output layer nodes satisfy a given condition; or

output values of all of output layer nodes of the AI model.

In an embodiment, the second resource set is different from the first resource set in at least one of the following:

a type of resource set is different;

a type of reference signal is different;

a reference signal is different;

a time domain resource for transmission is different;

a frequency domain resource for transmission is different;

a transmission port is different;

a transmission beam is different;

a reception beam is different;

the first resource set and the second resource set are independently configured; or,

the first resource set is a subset of the second resource set.

In an embodiment, the second channel state information of the second resource set includes at least one of the following:

identifiers of $K$ resources satisfying the given condition in the second resource set;

confidence or probability corresponding to K resources;

inference reference signal received power (RSRP) corresponding to $K$ resources;

inference reference signal received quality (RSRQ) corresponding to $K$ resources; or,

inference signal to interference and noise ratio (SINR) corresponding to $K$ resources;

where $K$ is a predefined or configured positive integer, and a value of $K$ does not exceed a quantity of the second resource sets.

In an embodiment, the first channel state information of the first resource set includes at least one of the following:

a channel estimation result obtained based on the at least one first resource set;

channel estimation result compression information obtained based on the at least one first resource set;

a channel estimation result and channel estimation result compression information obtained based on the at least one first resource set; or,

information for channel estimation or channel recovery corresponding to a resource in the first resource set.

In an embodiment, the output information of the AI model included in the report information is quantized and/or encoded information.

An embodiment of the present application further provides a network device, including a memory, a transceiver and a processor,
where the memory is used for storing a computer program, the transceiver is used for transmitting and receiving data under control of the processor, and the processor is used for reading the computer program in the memory and performing the following operations:
receiving report information transmitted from a terminal device, where the report information is determined based on at least one first resource set and at least one artificial intelligence (AI) model, the at least one first resource set and the at least one AI model have an association relationship, the report information includes part or all of output information of the at least one AI model, and the first resource set is a measurement resource set.

In an embodiment, the association relationship is determined based on at least one of the following:

an index of the at least one first resource set and an index of the at least one AI model are included in same report configuration information;

an index of the at least one first resource set and an index of the at least one AI model satisfy a given relationship; or,

an index of the at least one first resource set and an index of the at least one AI model are indicated by same association indication information.

In an embodiment, a quantity of the at least one first resource set is $N$, a quantity of the at least one AI model is $M$, $N$ and $M$ are both positive integers, and the association relationship includes:

if $N$ is greater than $M$, an $i$-th AI model is associated with first resource sets numbered $\left\lfloor \frac{N}{M} \right\rfloor \cdot i, \left\lfloor \frac{N}{M} \right\rfloor \cdot i + 1, ..., \left\lfloor \frac{N}{M} \right\rfloor \cdot (i+1) - 1$, or associated with first resource sets numbered $\left\lceil \frac{N}{M} \right\rceil$.

$$i, \left\lceil \frac{N}{M} \right\rceil \cdot i + 1, ..., \left\lceil \frac{N}{M} \right\rceil \cdot (i + 1) - 1 \; ;$$

if *N* is equal to *M,* an *i-th* AI model is associated with an *i-th* first resource set;

if *N* is less than *M,* an *i-th* first resource set is associated with AI models numbered $\left\lceil \frac{M}{N} \right\rceil$ .

$$i, \left\lceil \frac{M}{N} \right\rceil \cdot i + 1, ..., \left\lceil \frac{M}{N} \right\rceil \cdot (i + 1) - 1$$ , or associated with AI models numbered

$$\left\lceil \frac{M}{N} \right\rceil \cdot i, \left\lceil \frac{M}{N} \right\rceil \cdot i + 1, ..., \left\lceil \frac{M}{N} \right\rceil \cdot (i + 1) - 1 \; ;$$

or,

if *N* is greater than *M,* an AI model with index *j* is associated with first resource sets with indexes of

$$\left\lfloor \frac{N}{M} \right\rfloor \cdot j, \left\lfloor \frac{N}{M} \right\rfloor \cdot j + 1, ..., \left\lfloor \frac{N}{M} \right\rfloor \cdot (j + 1) - 1$$ , or associated with first resource sets with indexes of

$$\left\lceil \frac{N}{M} \right\rceil \cdot j, \left\lceil \frac{N}{M} \right\rceil \cdot j + 1, ..., \left\lceil \frac{N}{M} \right\rceil \cdot (j + 1) - 1 \; ;$$

if *N* is equal to *M,* an AI model with index *j* is associated with a first resource set with index *j;*

if *N* is less than *M,* a first resource set with index *j* is associated with AI models with indexes of

$$\left\lfloor \frac{M}{N} \right\rfloor \cdot j, \left\lfloor \frac{M}{N} \right\rfloor \cdot j + 1, ..., \left\lfloor \frac{M}{N} \right\rfloor \cdot (j + 1) - 1$$ , or associated with AI models with indexes of

$$\left\lceil \frac{M}{N} \right\rceil \cdot j, \left\lceil \frac{M}{N} \right\rceil \cdot j + 1, ..., \left\lceil \frac{M}{N} \right\rceil \cdot (j + 1) - 1 \; ;$$

where ⌈ ⌉ indicates rounding up, ⌊ ⌋ indicates rounding down, *i* is an integer from 1 to *M,* and *j* is an integer from 0 to *M-1.*

In an embodiment, the association indication information is used to indicate indexes of one or more AI models associated with each first resource set, and/or the association indication information is used to indicate one or more first resource sets associated with each AI model.

In an embodiment, determining the report information based on the at least one first resource set and the at least one AI model includes:

determining the report information based on the at least one first resource set and one or more AI models in the at least one AI model.

In an embodiment, determining the report information includes:

determining the report information based on the at least one first resource set and one AI model in the at least one AI model, where an input of the one AI model includes part or all of first resource sets in the at least one first resource set, the report information includes part or all of output information of the one AI model, the one AI model is selected by the terminal device or determined based on model indication information, or the one AI model is the only AI model included in the at least one AI model; or,

determining the report information based on the at least one first resource set and multiple AI models in the at least one AI model, where an input of each AI model among the multiple AI models includes part or all of first resource sets in the at least one first resource set, and the report information includes part or all of output information of the each AI model; or, an input of a first AI model among the multiple AI models includes part or all of first resource sets in the at least one first resource set, an input of an *(m + n)-th* AI model includes part or all of output information of an *m-th* to an *(m + n - 1)-th* AI models, and the report information includes part or all of output information of a last AI model among the multiple AI models, *m = 1, 2,...M-1, n is* a predefined or configured positive integer, *m + n* is an integer from 2 to *M,* and M is a quantity of the multiple AI models.

In an embodiment, the model indication information and/or the input information and the output information of each AI model is determined based on at least one of the following:

pre-definition in a protocol;

a radio resource control (RRC) message configuration;

a media access control - control element (MAC CE) indication; or

a downlink control information (DCI) indication.

In an embodiment, the output information of the AI model in the report information includes at least one of the following:

first channel state information of the first resource set;

second channel state information of a second resource set, where the second resource set corresponds to the output information of the AI model in the report information;

identifiers of part of output layer nodes of the AI model and/or output values of the part of output layer nodes, where the identifiers and/or output values of the part of output layer nodes satisfy a given condition; or

output values of all of output layer nodes of the AI model.

In an embodiment, the second resource set is different from the first resource set in at least one of the following:

a type of resource set is different;

a type of reference signal is different;

a reference signal is different;

a time domain resource for transmission is different;

a frequency domain resource for transmission is different;

a transmission port is different;

a transmission beam is different;

a reception beam is different;

the first resource set and the second resource set are independently configured; or,

the first resource set is a subset of the second resource set.

In an embodiment, the second channel state information of the second resource set includes at least one of the following:

identifiers of K resources satisfying the given condition in the second resource set;

confidence or probability corresponding to $K$ resources;

inference reference signal received power (RSRP) corresponding to $K$ resources;

inference reference signal received quality (RSRQ) corresponding to $K$ resources; or,

inference signal to interference and noise ratio (SINR) corresponding to $K$ resources;

where $K$ is a predefined or configured positive integer, and a value of $K$ does not exceed a quantity of the second resource sets.

In an embodiment, the first channel state information of the first resource set includes at least one of the following:

a channel estimation result obtained based on the at least one first resource set;

channel estimation result compression information obtained based on the at least one first resource set;

a channel estimation result and channel estimation result compression information obtained based on the at least one first resource set; or,

information for channel estimation or channel recovery corresponding to a resource in the first resource set.

In an embodiment, the output information of the AI model included in the report information is quantized and/or encoded information.

An embodiment of the present application further provides an apparatus for measurement report, including:

a first determining unit, used for determining at least one first resource set and at least one artificial intelligence (AI) model having an association relationship with the at least one first resource set, where the first resource set is a measurement resource set; and

a second determining unit, used for determining report information based on the at least one first resource set and the at least one AI model, and transmitting the report information to a network device, where the report information includes part or all of output information of the at least one AI model.

In an embodiment, the association relationship is determined based on at least one of the following:

an index of the at least one first resource set and an index of the at least one AI model are included in same report configuration information;

an index of the at least one first resource set and an index of the at least one AI model satisfy a given relationship; or,

an index of the at least one first resource set and an index of the at least one AI model are indicated by same association indication information.

In an embodiment, a quantity of the at least one first resource set is $N$, a quantity of the at least one AI model is $M$, $N$ and $M$ are both positive integers, and the association relationship includes:

if $N$ is greater than $M$, an $i$-th AI model is associated with first resource sets numbered $\left\lfloor \frac{N}{M} \right\rfloor \cdot i, \left\lfloor \frac{N}{M} \right\rfloor \cdot i + 1, ..., \left\lfloor \frac{N}{M} \right\rfloor \cdot (i+1) - 1$, or associated with first resource sets numbered $\left\lceil \frac{N}{M} \right\rceil \cdot i, \left\lceil \frac{N}{M} \right\rceil \cdot i + 1, ..., \left\lceil \frac{N}{M} \right\rceil \cdot (i+1) - 1$;

if $N$ is equal to $M$, an $i$-th AI model is associated with an $i$-th first resource set;

if $N$ is less than $M$, an $i$-th first resource set is associated with AI models numbered $\left\lfloor \frac{M}{N} \right\rfloor \cdot i, \left\lfloor \frac{M}{N} \right\rfloor \cdot i + 1, ..., \left\lfloor \frac{M}{N} \right\rfloor \cdot (i+1) - 1$, or associated with AI models numbered $\left\lceil \frac{M}{N} \right\rceil \cdot i, \left\lceil \frac{M}{N} \right\rceil \cdot i + 1, ..., \left\lceil \frac{M}{N} \right\rceil \cdot (i+1) - 1$; or,

if $N$ is greater than $M$, an AI model with index j is associated with first resource sets with indexes of $\left\lfloor \frac{N}{M} \right\rfloor \cdot j, \left\lfloor \frac{N}{M} \right\rfloor \cdot j + 1, ..., \left\lfloor \frac{N}{M} \right\rfloor \cdot (j+1) - 1$, or associated with first resource sets with indexes of

$$\left\lceil\frac{N}{M}\right\rceil \cdot j, \left\lceil\frac{N}{M}\right\rceil \cdot j + 1, ..., \left\lceil\frac{N}{M}\right\rceil \cdot (j + 1) - 1;$$

if *N* is equal to *M,* an AI model with index *j* is associated with a first resource set with index *j;*

if *N* is less than *M,* a first resource set with index *j* is associated with AI models with indexes of $\left\lceil\frac{M}{N}\right\rceil \cdot j, \left\lceil\frac{M}{N}\right\rceil \cdot j + 1, ..., \left\lceil\frac{M}{N}\right\rceil \cdot (j + 1) - 1$, or associated with AI models with indexes of $\left\lfloor\frac{M}{N}\right\rfloor \cdot j, \left\lfloor\frac{M}{N}\right\rfloor \cdot j + 1, ..., \left\lfloor\frac{M}{N}\right\rfloor \cdot (j + 1) - 1;$

where ⌈ ⌉ indicates rounding up, ⌊ ⌋ indicates rounding down, *i* is an integer from 1 to *M,* and *j* is an integer from 0 to *M-1.*

In an embodiment, the association indication information is used to indicate indexes of one or more AI models associated with each first resource set, and/or the association indication information is used to indicate one or more first resource sets associated with each AI model.

In an embodiment, the second determining unit is further used for:
determining the report information based on the at least one first resource set and one or more AI models in the at least one AI model.

In an embodiment, the second determining unit is further used for:

determining the report information based on the at least one first resource set and one AI model in the at least one AI model, where an input of the one AI model includes part or all of first resource sets in the at least one first resource set, the report information includes part or all of output information of the one AI model, the one AI model is selected by a terminal device or determined based on model indication information, or the one AI model is the only AI model included in the at least one AI model; or,

determining the report information based on the at least one first resource set and multiple AI models in the at least one AI model, where an input of each AI model among the multiple AI models includes part or all of first resource sets in the at least one first resource set, and the report information includes part or all of output information of the each AI model; or, an input of a first AI model among the multiple AI models includes part or all of first resource sets in the at least one first resource set, an input of an *(m + n)-th* AI model includes part or all of output information of an *m-th* to an *(m + n - 1)-th* AI models, and the report information includes part or all of output information of a last AI model among the multiple AI models, m = *1, 2,...M-1, n is* a predefined or configured positive integer, *m + n* is an integer from 2 to *M,* and *M* is a quantity of the multiple AI models.

In an embodiment, the model indication information and/or the input information and the output information of each AI model is determined based on at least one of the following:

pre-definition in a protocol;

a radio resource control (RRC) message configuration;

a media access control - control element (MAC CE) indication; or

a downlink control information (DCI) indication.

In an embodiment, the output information of the AI model in the report information includes at least one of the following:

first channel state information of the first resource set;

second channel state information of a second resource set, where the second resource set corresponds to the output information of the AI model in the report information;

identifiers of part of output layer nodes of the AI model and/or output values of the part of output layer nodes of the AI model, where the identifiers and/or output values of the part of output layer nodes satisfy a given condition; or

output values of all of output layer nodes of the AI model.

In an embodiment, the second resource set is different from the first resource set in at least one of the following:

a type of resource set is different;

a type of reference signal is different;

a reference signal is different;

a time domain resource for transmission is different;

a frequency domain resource for transmission is different;

a transmission port is different;

a transmission beam is different;

a reception beam is different;

the first resource set and the second resource set are independently configured; or,

the first resource set is a subset of the second resource set.

In an embodiment, the second channel state information of the second resource set includes at least one of the following:

identifiers of $K$ resources satisfying the given condition in the second resource set;

confidence or probability corresponding to $K$ resources;

inference reference signal received power (RSRP) corresponding to $K$ resources;

inference reference signal received quality (RSRQ) corresponding to $K$ resources; or,

inference signal to interference and noise ratio (SINR) corresponding to $K$ resources;

where $K$ is a predefined or configured positive integer, and a value of $K$ does not exceed a quantity of the second resource sets.

In an embodiment, the first channel state information of the first resource set includes at least one of the following:

a channel estimation result obtained based on the at least one first resource set;

channel estimation result compression information obtained based on the at least one first resource set;

a channel estimation result and channel estimation result compression information obtained based on the at least one first resource set; or,

information for channel estimation or channel recovery corresponding to a resource in the first resource set.

In an embodiment, the output information of the AI model included in the report information is quantized and/or encoded information.

An embodiment of the present application further provides an apparatus for measurement report, including:

a receiving unit, used for receiving report information transmitted from a terminal device, where the report information is determined based on at least one first resource set and at least one artificial intelligence (AI) model, the at least one first resource set and the at least one AI model have an association relationship, the report information includes part or all of output information of the at least one AI model, and the first resource set is a measurement resource set.

In an embodiment, the association relationship is determined based on at least one of the following:

an index of the at least one first resource set and an index of the at least one AI model are included in same report configuration information;

an index of the at least one first resource set and an index of the at least one AI model satisfy a given relationship; or,

an index of the at least one first resource set and an index of the at least one AI model are indicated by same association indication information.

In an embodiment, a quantity of the at least one first resource set is $N$, a quantity of the at least one AI model is $M$, $N$ and $M$ are both positive integers, and the association relationship includes:

if $N$ is greater than $M$, an $i$-th AI model is associated with first resource sets numbered $\left\lfloor \frac{N}{M} \right\rfloor \cdot i, \left\lfloor \frac{N}{M} \right\rfloor \cdot i + 1, ..., \left\lfloor \frac{N}{M} \right\rfloor \cdot (i+1) - 1$, or associated with first resource sets numbered $\left\lceil \frac{N}{M} \right\rceil \cdot i, \left\lceil \frac{N}{M} \right\rceil \cdot i + 1, ..., \left\lceil \frac{N}{M} \right\rceil \cdot (i+1) - 1$;

if $N$ is equal to $M$, an $i$-th AI model is associated with an $i$-th first resource set;

if $N$ is less than $M$, an $i$-th first resource set is associated with AI models numbered $\left\lfloor \frac{M}{N} \right\rfloor \cdot i, \left\lfloor \frac{M}{N} \right\rfloor \cdot i + 1, ..., \left\lfloor \frac{M}{N} \right\rfloor \cdot (i+1) - 1$, or associated with AI models numbered $\left\lceil \frac{M}{N} \right\rceil \cdot i, \left\lceil \frac{M}{N} \right\rceil \cdot i + 1, ..., \left\lceil \frac{M}{N} \right\rceil \cdot (i+1) - 1$; or,

if $N$ is greater than $M$, an AI model with index $j$ is associated with first resource sets with indexes of $\left\lfloor \frac{N}{M} \right\rfloor \cdot j, \left\lfloor \frac{N}{M} \right\rfloor \cdot j + 1, ..., \left\lfloor \frac{N}{M} \right\rfloor \cdot (j+1) - 1$, or associated with first resource sets with indexes of $\left\lceil \frac{N}{M} \right\rceil \cdot j, \left\lceil \frac{N}{M} \right\rceil \cdot j + 1, ..., \left\lceil \frac{N}{M} \right\rceil \cdot (j+1) - 1$;

if $N$ is equal to $M$, an AI model with index $j$ is associated with a first resource set with index $j$;

if $N$ is less than $M$, a first resource set with index $j$ is associated with AI models with indexes of $\left\lfloor \frac{M}{N} \right\rfloor \cdot j, \left\lfloor \frac{M}{N} \right\rfloor \cdot j + 1, ..., \left\lfloor \frac{M}{N} \right\rfloor \cdot (j+1) - 1$, or associated with AI models with indexes of $\left\lceil \frac{M}{N} \right\rceil \cdot j, \left\lceil \frac{M}{N} \right\rceil \cdot j + 1, ..., \left\lceil \frac{M}{N} \right\rceil \cdot (j+1) - 1$;

where $\lceil \ \rceil$ indicates rounding up, $\lfloor \ \rfloor$ indicates rounding down, $i$ is an integer from 1 to $M$, and $j$ is an integer from 0 to $M-1$.

In an embodiment, the association indication information is used to indicate indexes of one or more AI models associated with each first resource set, and/or the association indication information is used to indicate one or more first resource sets associated with each AI model.

In an embodiment, determining the report information based on the at least one first resource set and the at least one AI model includes:

determining the report information based on the at least one first resource set and one or more AI models in the at least one AI model.

In an embodiment, determining the report information includes:

determining the report information based on the at least one first resource set and one AI model in the at least one AI model, where an input of the one AI model includes part or all of first resource sets in the at least one first resource set, the report information includes part or all of output information of the one AI model, the one AI model is selected by the terminal device or determined based on model indication information, or the one AI model is the only AI model included in the at least one AI model; or,

determining the report information based on the at least one first resource set and multiple AI models in the at least one AI model, where an input of each AI model among the multiple AI models includes part or all of first resource sets in the at least one first resource set, and the report information includes part or all of output information of the each AI model; or, an input of a first AI model among the multiple AI models includes part or all of first resource sets in the at least one first resource set, an input of an *(m + n)-th* AI model includes part or all of output information of an *m-th* to an *(m + n - 1)-th* AI models, and the report information includes part or all of output information of a last AI model among the multiple AI models, m = *1, 2,...M-1, n* is a predefined or configured positive integer, *m + n* is an integer from 2 to *M,* and M is a quantity of the multiple AI models.

In an embodiment, the model indication information and/or the input information and the output information of each AI model is determined based on at least one of the following:

pre-definition in a protocol;

a radio resource control (RRC) message configuration;

a media access control - control element (MAC CE) indication; or

a downlink control information (DCI) indication.

In an embodiment, the output information of the AI model in the report information includes at least one of the following:

first channel state information of the first resource set;

second channel state information of a second resource set, where the second resource set corresponds to the output information of the AI model in the report information;

identifiers of part of output layer nodes of the AI model and/or output values of the part of output layer nodes, where the identifiers and/or output values of the part of output layer nodes satisfy a given condition; or

output values of all of output layer nodes of the AI model.

In an embodiment, the second resource set is different from the first resource set in at least one of the following:

a type of resource set is different;

a type of reference signal is different;

a reference signal is different;

a time domain resource for transmission is different;

a frequency domain resource for transmission is different;

a transmission port is different;

a transmission beam is different;

a reception beam is different;

the first resource set and the second resource set are independently configured; or,

the first resource set is a subset of the second resource set.

In an embodiment, the second channel state information of the second resource set includes at least one of the following:

identifiers of K resources satisfying the given condition in the second resource set;

confidence or probability corresponding to K resources;

inference reference signal received power (RSRP) corresponding to K resources;

inference reference signal received quality (RSRQ) corresponding to K resources; or,

inference signal to interference and noise ratio (SINR) corresponding to K resources;

where $K$ is a predefined or configured positive integer, and a value of $K$ does not exceed a quantity of the second resource sets.

In an embodiment, the first channel state information of the first resource set includes at least one of the following:

a channel estimation result obtained based on the at least one first resource set;

channel estimation result compression information obtained based on the at least one first resource set;

a channel estimation result and channel estimation result compression information obtained based on the at least one first resource set; or,

information for channel estimation or channel recovery corresponding to a resource in the first resource set.

In an embodiment, the output information of the AI model included in the report information is quantized and/or encoded information.

An embodiment of the present application further provides a processor-readable storage medium storing a computer program that causes a processor to perform steps of any of the above-mentioned methods for measurement report.

An embodiment of the present application further provides a computer-readable storage medium storing a computer program that causes a computer to perform steps of any of the above-mentioned methods for measurement report.

An embodiment of the present application further provides a communication device-readable storage medium storing a computer program that causes a communication device to perform steps of any of the above-mentioned methods for measurement report.

An embodiment of the present application further provides a chip product-readable storage medium storing a computer program that causes a chip product to perform steps of any of the above-mentioned methods for measurement report.

In the methods and apparatuses for measurement report, and the storage medium, the at least one first resource set that needs to be inferred and the at least one AI model associated with the at least one first resource set are determined, and the report information is obtained through inference based on the associated at least one first resource set and at least one AI model, which, by using the AI model, improves the accuracy of measurement and management, reduces the measurement overhead of measurement resource, and shortens the measurement cycle.

BRIEF DESCRIPTION OF THE DRAWINGS

In order to illustrate the solutions in the embodiments of the present application and the related art more clearly, the drawings used in the description of the embodiments and the related art are briefly described below. The drawings in the following description are only some embodiments of the present application, and other drawings may be obtained according to these drawings without any creative work for those skilled in the art.

FIG. 1 is a schematic flowchart of a method for measurement report according to the related art;

FIG. 2 is a first schematic flowchart of a method for measurement report according to an embodiment of the present application;

FIG. 3 is a schematic diagram of an association between a measurement resource set and AI models according to an embodiment of the present application;

FIG. 4 is a schematic structural diagram of cascade AI models according to an embodiment of the present application;

FIG. 5 is a first schematic structural diagram of parallel AI models according to an embodiment of the present application;

FIG. 6 is a second schematic structural diagram of parallel AI models according to an embodiment of the present application;

FIG. 7 is a third schematic structural diagram of parallel AI models according to an embodiment of the present application;

FIG. 8 is a schematic structural diagram of input layer nodes and output layer nodes of an AI model according to an embodiment of the present application;

FIG. 9 is a second schematic flowchart of a method for measurement report according to an embodiment of the present application;

FIG. 10 is a third schematic flowchart of a method for measurement report according to an embodiment of the present application;

FIG. 11 is a fourth schematic flowchart of a method for measurement report according to an embodiment of the present application;

FIG. 12 is a fifth schematic flowchart of a method for measurement report according to an embodiment of the present application;

FIG. 13 is a schematic structural diagram of a terminal device according to an embodiment of the present application;

FIG. 14 is a schematic structural diagram of a network device according to an embodiment of the present application;

FIG. 15 is a first schematic structural diagram of an apparatus for measurement report according to an embodiment of the present application; and

FIG. 16 is a second schematic structural diagram of an apparatus for measurement report according to an embodiment of the present application.

DETAILED DESCRIPTION

In order to better describe the solutions in the embodiments of the present application, relevant contents are introduced below.

(1) Channel state information (CSI) measurement and report

In the new radio (NR) system, in case of performing CSI measurement and report, a principle of "report information of a measured object, and not report information of an unmeasured object" is followed. The report content only reflects a measurement result of a measurement resource and does not exceed a scope of the measurement resource.

A network device (e.g., a base station, gNB) may notify CSI report configuration information (*CSI-ReportConfig*) through a higher layer signaling such as a radio resource control (RRC) signaling. The CSI report configuration information includes measurement resource indication information, such as *resourcesForChannelMeasurement, csi-IM-Resources-ForInterference* and *nzp-CSI-RS-ResourcesForInterference,* etc. The measurement resource indication information indicates a CSI measurement resource index *(CSI-ResourceConfigId)*, that is, a measurement resource set.

A user equipment (UE) needs to measure the measurement resource set indicated in the CSI report configuration information, such as the measurement resource set corresponding to a CSI measurement resource index indicated by *resourcesForChannelMeasurement,* and determine a reporting result corresponding to the measurement resource set. The reporting result reflects information of the measurement resource.

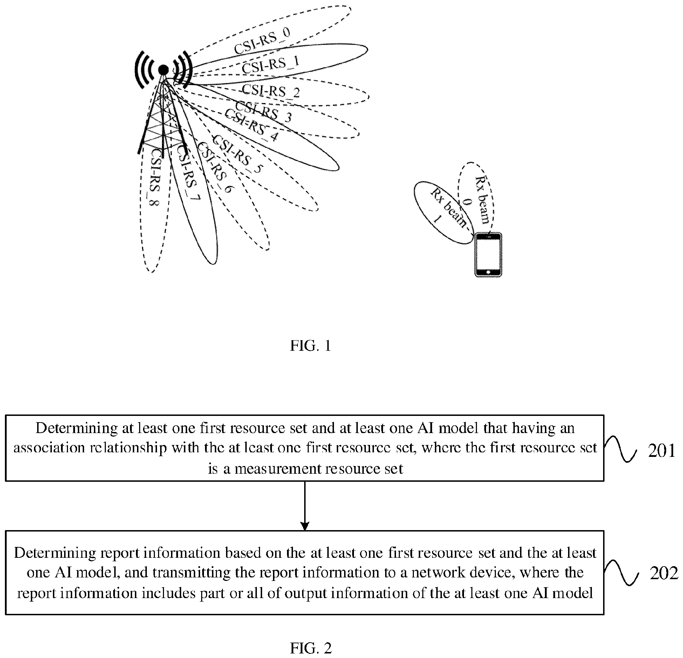

For the measurement resources not included in the CSI report configuration message, the reporting result does not include relevant information of these resources. FIG. 1 is a schematic flowchart of a method for measurement report according to the related art. As shown in FIG. 1, a base station (gNB) indicates in report configuration information, through *resourcesForChannelMeasurement,* that the measurement resource set is a non-zero power channel state information reference signal (CSI-RS) including {CSI-RS_1, CSI-RS_4, CSI-RS_7}, which corresponds to the solid line ellipses of the base station portion in FIG. 1. The Rx beams of the terminal part represent different reception beams.

The reporting results of the UE may include: a CSI-RS with the highest reference signal received power (RSRP) in {CSI-RS_1, CSI-RS_4, CSI-RS_7}, and a channel estimation result obtained based on {CSI-RS_1, CSI-RS_4, CSI-RS_7} (such as the codebook of the downlink channel in case of using the beams corresponding to {CSI-RS_1, CSI-RS_4, CSI-RS_7}), etc.

In the report configuration information, the measurement resource does not include relevant information of any of CSI-RS_0, CSI-RS_2, CSI-RS_3, CSI-RS_5, CSI-RS_6, and CSI-RS_8 (corresponding to the dotted ellipses of the base station part in FIG. 1). For example, it is impossible to report CSI-RS_0 as the CSI-RS with the highest RSRP.

(2) Artificial Intelligence (AI)

The AI possess capabilities of learning and inference. After learning and training, an AI model may infer relevant information of unmeasured resources other than input measurement resources based on limited input measurement resources or relevant information of the measurement resources (such as a channel measurement result); or, after learning and training, even if only relevant information of the measurement resources is output, the measurement accuracy or compression rate is higher than the measurement accuracy or compression rate of the related art.

The traditional NR system cannot obtain relevant information of unmeasured resources, and does not support inference work based on an AI model.

In response to the problems in the related art, embodiments of the present application provide methods and apparatuses for measurement report, and a storage medium.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions according to the embodiments of the present application may be applicable to various systems, for example, 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or a cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

FIG. 2 is a first schematic flowchart of a method for measurement report according to an embodiment of the present application. As shown in FIG. 2, the method is performed by a terminal device, and the method includes the following steps.

Step 201: determining at least one first resource set and at least one AI model having an association relationship with the at least one first resource set, where the first resource set is a measurement resource set.

Step 202: determining report information based on the at least one first resource set and the at least one AI model, and transmitting the report information to a network device, where the report information includes part or all of output information of the at least one AI model.

In an embodiment, the terminal determines the at least one first resource set and the at least one AI model associated with the at least one first resource set. Part or all AI models in the at least one AI model are used to infer the at least one first resource set associated with the at least one AI model, and the output information of the AI model is obtained. Part or all of the output information of the AI model may be used as the content of the report information.

The first resource set is a measurement resource set, such as a measurement resource set indicated in the CSI report configuration information. The AI model may be obtained after training based on a sample measurement resource set and a predetermined report information label.

The output of the AI model may be set as needed. For example, only the relevant information of the measurement resource set is output, which may improve the measurement accuracy and reduce the measurement overhead compared with the related measurement mode that does not use an AI model. For example, the relevant information of unmeasured resources other than the measurement resource set is output, compared with the related measurement mode that does not use the AI model, in addition to obtaining the relevant information of the measurement resource set measured by the UE, the relevant information of the unmeasured resources other than the measurement resource set may also be obtained.

The input of the AI model may be set as needed. For example, part or all of the measurement resource set that needs to be inferred is used as the input of the AI model. For example, part or all of the information such as a channel measurement result obtained by the UE based on the measurement resource set is used as the input of the AI model. In the embodiment of the present application, as an example for description, the measurement resource set is used as the input in the AI inference procedure.

In an embodiment, determining the report information based on the at least one first resource set and the at least one AI model includes:

determining a channel measurement result of the at least one first resource set; and

determining the report information based on the channel measurement result and the at least one AI model.

The at least one AI model associated with the at least one first resource set may be an AI model set, and each AI model in the AI model set corresponds to an AI model index. The AI model set may be determined based on a network node indication on the network side, or may be downloaded from a public server. Similarly, the at least one first resource set may be a first resource set list, and each first resource set in the first resource set list corresponds to a first resource set index.

The AI model is used to infer information such as the measurement resource set and/or the channel measurement result corresponding to the measurement resource set to obtain the report information from the AI model inference. This procedure may be executed by the terminal. After determining the report information, the terminal transmits the report information to the network device, and the network device performs resource scheduling based on the report information.

This procedure may also be executed by the network device. After determining the report information, the network device performs resource scheduling based on the report information. This procedure may also be performed jointly by the terminal and the network device, and the AI models are deployed on both the terminal side and the network device side.

For the terminal device, after the AI model is used to perform inference to determine the report information, the report information is transmitted to the network device. For the network device, the AI model is used to perform inference to determine the report information, or the report information transmitted from the terminal is obtained, and the report information is used for resource scheduling.

When the AI inference is performed entirely by the terminal side, it may cause the computing load of the terminal being too high and the power consumption being too large. When the AI inference is performed entirely by the network device, there may be risks such as leakage of privacy data of the terminal side. Therefore, a compromise implementation mode is to deploy AI models on both the terminal side and the network device side. For example, two different parts of all AI models in a complete inference procedure are deployed on both sides. In this case, the local AI model output reported by the terminal to the network device may be used as the input of the AI inference model on the network device side.

The AI models are deployed on both the terminal side and the network device side for inference, which not only improves the accuracy of measurement and management by using the inference function of AI, reduces the overhead of measurement resource, and shortens the measurement cycle, but also balances between the computing load and privacy security. In the embodiments of the present application, the procedure of performing AI inference by the terminal is used for description.

In the method for measurement report provided by the embodiments of the present application, the at least one first resource set that needs to be inferred and the at least one AI model associated with the at least one first resource set are determined, and the report information is obtained through inference based on the associated at least one first resource set and at least one AI model, which, by using the AI model, improves the accuracy of measurement and management, reduces the overhead of measurement resource, and shortens the measurement cycle.

In an embodiment, the association relationship is determined based on at least one of the following:

an index of the at least one first resource set and an index of the at least one AI model are included in same report configuration information;

an index of the at least one first resource set and an index of the at least one AI model satisfy a given relationship; or,

an index of the at least one first resource set and an index of the at least one AI model are indicated by same association indication information.

In an embodiment, the at least one first resource set and the at least one AI model associated with the at least one first resource set may be determined by at least one of the following modes.

① The at least one first resource set and the at least one AI model whose indexes are included in the same report configuration information are associated.

The CSI report configuration message may include indexes of one or more AI models, and may also include indexes of one or more measurement resource sets. The measurement resource set corresponding to the index of measurement resource set in the report configuration information and the AI model corresponding to the index of AI model in the report configuration information are associated with each other. The number of both the measurement resource set and the AI model may be one or more.

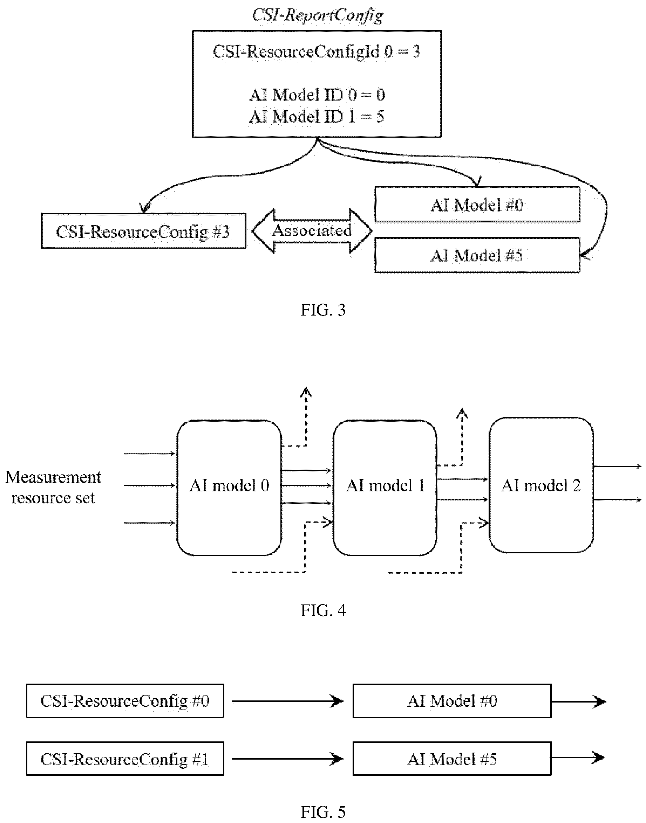

FIG. 3 is a schematic diagram of an association between a measurement resource set and AI models according to an embodiment of the present application. As shown in FIG. 3, report configuration information (*CSI-ReportConfig*) includes one index of measurement resource set. For example, a measurement resource set is indicated by a channel measurement resource indication information (*CSI-ResourceConfigId 0* is indicated by *resourcesForChannelMeasurement*), where an indicated index value is 3. The report configuration information also includes two indexes of AI models (AI Model ID 0 and AI Model ID 1), where the indicated index values are 0 and 5.

Therefore, it can be determined that the measurement resource set with an index of 3 is associated with the AI models with indexes of 0 and 5.

② The at least one first resource set and the at least one AI model whose indexes satisfying a given relationship are associated.

The given relationship between the index of the measurement resource set and the index of the AI model may be pre-definition in a protocol, configured by a network device, etc. For example, the first resource set and the AI model having the same index value are associated. For example, the first resource set and the AI model whose index values satisfying a specific functional relationship are associated.

③ The at least one first resource set and the at least one AI model indicated by a piece of association indication information are associated.

The association relationship between the first resource set and the AI model may be indicated by dedicated association indication information, and the association indication information includes the indexes of the associated first resource set and the AI model. The association indication information may be in the form of a list, and the list includes the indexes of the associated first resource set and the AI model.

In the method for measurement report provided by the embodiments of the present application, the associated at least one first resource set and the at least one AI model are determined through the report configuration information, the given relationship between indexes or the association indication information, and the report information is obtained through inference based on the associated at least one first resource set and the at least one AI model, which, by using the AI model, improves the accuracy of measurement and management, reduces the overhead of measurement resource, and shortens the measurement cycle.

In an embodiment, a quantity of the at least one first resource set is $N$, a quantity of the at least one AI model is $M$, $N$ and $M$ are both positive integers, and the association relationship includes:

in case that the association relationship is determined based on the report configuration information,

if $N$ is greater than $M$, an $i$-th AI model is associated with first resource sets numbered $\left\lfloor \frac{N}{M} \right\rfloor \cdot i, \left\lfloor \frac{N}{M} \right\rfloor \cdot i + 1, ..., \left\lfloor \frac{N}{M} \right\rfloor \cdot (i+1) - 1$, or associated with first resource sets numbered $\left\lceil \frac{N}{M} \right\rceil$ $i, \left\lceil \frac{N}{M} \right\rceil \cdot i + 1, ..., \left\lceil \frac{N}{M} \right\rceil \cdot (i+1) - 1$;

if $N$ is equal to $M$, an $i$-th AI model is associated with an $i$-th first resource set;

if $N$ is less than $M$, an $i$-th first resource set is associated with AI models numbered $\left\lfloor \frac{M}{N} \right\rfloor$ $i, \left\lfloor \frac{M}{N} \right\rfloor \cdot i + 1, ..., \left\lfloor \frac{M}{N} \right\rfloor \cdot (i+1) - 1$, or associated with AI models numbered $\left\lceil \frac{M}{N} \right\rceil \cdot i, \left\lceil \frac{M}{N} \right\rceil \cdot i + 1, ..., \left\lceil \frac{M}{N} \right\rceil \cdot (i+1) - 1$; or,

in case that the association relationship is determined by the given relationship, or the association relationship is indicated by the association indication information,

if $N$ is greater than $M$, an AI model with index $j$ is associated with first resource sets with indexes of $\left\lfloor \frac{N}{M} \right\rfloor \cdot j, \left\lfloor \frac{N}{M} \right\rfloor \cdot j + 1, ..., \left\lfloor \frac{N}{M} \right\rfloor \cdot (j+1) - 1$, or associated with first resource sets with indexes of $\left\lceil \frac{N}{M} \right\rceil \cdot j, \left\lceil \frac{N}{M} \right\rceil \cdot j + 1, ..., \left\lceil \frac{N}{M} \right\rceil \cdot (j+1) - 1$;

if $N$ is equal to $M$, an AI model with index $j$ is associated with a first resource set with index $j$;

if $N$ is less than $M$, a first resource set with index $j$ is associated with AI models with indexes of $\left\lfloor \frac{M}{N} \right\rfloor \cdot j, \left\lfloor \frac{M}{N} \right\rfloor \cdot j + 1, ..., \left\lfloor \frac{M}{N} \right\rfloor \cdot (j+1) - 1$, or associated with AI models with indexes of $\left\lceil \frac{M}{N} \right\rceil \cdot j, \left\lceil \frac{M}{N} \right\rceil \cdot j + 1, ..., \left\lceil \frac{M}{N} \right\rceil \cdot (j+1) - 1$;

where ⌈ ⌉ indicates rounding up, ⌊ ⌋ indicates rounding down, $i$ is an integer from 1 to $M$, and $j$ is an integer from 0 to $M$-1.

In an embodiment, on the basis of determining the associated at least one first resource set and at least one AI model, the AI model associated with each first resource set and/or the first resource set associated with each AI model may be further determined.

It is assumed that the quantity of at least one first resource set is $N$, the quantity of at least one AI model is $M$, and both $M$ and $N$ are positive integers.

For ①, it is determined that the at least one first resource set and the at least one AI model whose indexes being included in the same report configuration information are associated. In the report configuration information, the indexes of multiple first resource sets are arranged in a certain order, and the indexes of multiple AI models are arranged in a certain order.

If $N$ is greater than $M$, that is, the quantity of first resource sets is greater than the quantity of AI models, then the *i-th* AI model is associated with first resource sets numbered $\left\lfloor\frac{N}{M}\right\rfloor \cdot i, \left\lfloor\frac{N}{M}\right\rfloor \cdot i + 1, ..., \left\lfloor\frac{N}{M}\right\rfloor \cdot (i+1) - 1$, or associated with first resource sets numbered $\left\lceil\frac{N}{M}\right\rceil i, \left\lceil\frac{N}{M}\right\rceil \cdot i + 1, ..., \left\lceil\frac{N}{M}\right\rceil \cdot (i+1) - 1$.

If $N$ is equal to $M$, that is, the quantity of first resource sets is equal to the quantity of AI models, the *i-th* AI model is associated with the *i-th* first resource set.

If $N$ is less than $M$, that is, the quantity of first resource sets is less than the quantity of AI models, the *i-th* first resource set is associated with AI models numbered $\left\lfloor\frac{M}{N}\right\rfloor \cdot i, \left\lfloor\frac{M}{N}\right\rfloor \cdot i + 1, ..., \left\lfloor\frac{M}{N}\right\rfloor \cdot (i+1) - 1$, or associated with AI models numbered $\left\lceil\frac{M}{N}\right\rceil \cdot i, \left\lceil\frac{M}{N}\right\rceil \cdot i + 1, ..., \left\lceil\frac{M}{N}\right\rceil \cdot (i+1)$ - 1.

⌈ ⌉ indicates rounding up, ⌊ ⌋ indicates rounding down, and $i$ is an integer from 1 to M.

For example, the quantity of indexes of the measurement resource sets and the quantity of indexes of the AI models included in the report configuration information are the same. For example, the quantity of indexes of a same type of measurement resource sets is the same as the quantity of indexes of the AI models in the report configuration information. For example, the quantity of indexes of the AI model is 2, the quantity of indexes of *resourcesForChannelMeasurement* is also 2, the quantity of indexes of *csi-IM-ResourcesForInterference* is either zero or two, and the quantity of indexes of *nzp-CSI-RS-ResourcesForInterference* is either zero or two.

Not only it can be determined that there is an association between one or more measurement resource sets and one or more AI models, but it is also possible to further clarify the association between each measurement resource set and each AI model, or the association between measurement resource sets of the same type and AI models.

For ②, the at least one first resource set and the at least one AI model which have the indexes satisfying the given relationship are associated.

If $N$ is greater than $M$, that is, the quantity of first resource sets is greater than the quantity of AI models, the AI model with index $j$ is associated with first resource sets with indexes of $\left\lfloor\frac{N}{M}\right\rfloor \cdot j, \left\lfloor\frac{N}{M}\right\rfloor \cdot j + 1, ..., \left\lfloor\frac{N}{M}\right\rfloor \cdot (j+1) - 1$, or associated with first resource sets with indexes of $\left\lceil\frac{N}{M}\right\rceil \cdot j, \left\lceil\frac{N}{M}\right\rceil \cdot j + 1, ..., \left\lceil\frac{N}{M}\right\rceil \cdot (j+1) - 1$.

If $N$ is equal to $M$, that is, the quantity of first resource sets is equal to the quantity of AI models, the AI model with index $j$ is associated with a first resource set with index $j$.

If $N$ is less than $M$, that is, the quantity of first resource sets is less than the quantity of AI models, the first resource set with index $j$ is associated with AI models with indexes of $\left\lfloor\frac{M}{N}\right\rfloor \cdot j, \left\lfloor\frac{M}{N}\right\rfloor \cdot j + 1, ..., \left\lfloor\frac{M}{N}\right\rfloor \cdot (j+1) - 1$, or associated with AI models with indexes of $\left\lceil\frac{M}{N}\right\rceil j, \left\lceil\frac{M}{N}\right\rceil \cdot j + 1, ..., \left\lceil\frac{M}{N}\right\rceil \cdot (j+1) - 1$.

⌈ ⌉ indicates rounding up, ⌊ ⌋ indicates rounding down, and $j$ is an integer from 0 to $M$-1.

For example, the first resource sets with indexes of 0 to 3 are associated with the AI models with indexes of 0 to 7. In an embodiment, the first resource set with index 0 is associated with AI models with indexes 0 and 1, the first resource set with index 1 is associated with AI models with indexes 2 and 3, the first resource set with index 2 is associated with AI models with indexes 4 and 5, and the first resource set with index 3 is associated with AI models with indexes 6 and 7.

In an embodiment, the association indication information is used to indicate indexes of one or more AI models associated with each first resource set, and/or the association indication information is used to indicate one or more first resource sets associated with each AI model.

In an embodiment, in case that the association relationship between the first resource set and the AI model is indicated by the association indication information, for each first resource set, the association indication information may indicate the index of one or more AI models associated with the first resource set; for each AI model, the association indication information may indicate the index of one or more first resource sets associated with the AI model.

For example, the association indication information is in the form of a list, the index of each AI model and the index of the first resource set corresponding thereto are indicated in the list, or the index of each first resource set and the index of the AI model corresponding thereto are indicated in the list.

In the method for measurement report provided by the embodiments of the present application, not only the associated at least one first resource set and at least one AI model may be determined, but also whether the relationship between the first resource set and the AI model is one-to-one, one-to-many or many-to-one may be further determined, which simplifies the complexity of AI inference.

In an embodiment, determining the report information based on the at least one first resource set and the at least one AI model includes:

determining the report information based on the at least one first resource set and one or more AI models in the at least one AI model.

In an embodiment, after determining the at least one AI model associated with the at least one first resource set, the AI model used to determine the report information may be further filtered out based on a predetermined rule. The used AI models may be one or more, and may be part or all of the at least one AI model associated with the at least one first resource set.

In an embodiment, determining the report information includes:

determining the report information based on the at least one first resource set and one AI model in the at least one AI model, where an input of the one AI model includes part or all of first resource sets in the at least one first resource set, the report information includes part or all of output information of the one AI model, the one AI model is selected by a terminal or determined based on model indication information, or the one AI model is the only AI model included in the at least one AI model; or,

determining the report information based on the at least one first resource set and multiple AI models in the at least one AI model, where an input of each AI model among the multiple AI models includes part or all of first resource sets in the at least one first resource set, and the report information includes part or all of output information of the each AI model; or, an input of a first AI model among the multiple AI models includes part or all of first resource sets in the at least one first resource set, an input of an *(m + n)-th* AI model includes part or all of output information of an *m-th* to an *(m + n - 1)-th* AI models, and the report information includes part or all of output information of a last AI model among the multiple AI models, m = *1, 2,...M-1, n is* a predefined or configured positive integer, *m + n* is an integer from 2 to *M,* and M is a quantity of the multiple AI models.

In an embodiment, the AI models actually used in determining the report information may be one or more.

For the procedure of using only one AI model for inference, it may be further divided into the following.

① The at least one first resource set is associated with only one AI model. In case that the quantity of AI model is 1, for example, the report configuration information only includes the index of one AI model, the AI model is uniquely determined, and part or all of the first resource sets in at least one first resource set associated with the AI model are used as the input of the AI model. Part or all of the output information of the AI model may be used as the content of the report information.

② The at least one first resource set is associated with multiple AI models.

Determining the AI model to be used from the multiple AI models may be further divided into the following.

(1) An AI model is selected by the terminal.
The terminal decides to use one of the multiple AI models based on its own preferences or needs. Part or all of the first resource sets in at least one first resource set associated with the at least one AI model are used as the input of the AI model. Part or all of the output information of the AI model may be used as the content of the report information. In an embodiment, the UE determines the report information and transmits the report information to the network device. The report information may also include information about the inference model selected by the UE, such as the index of the AI model, to allow the network device know the AI model used by the UE.

(2) The AI model is determined based on the model indication information.

The model indication information may indicate one or more AI models. In case that the model indication information only indicates one AI model, the terminal determines one AI model from the at least one AI model associated with the at least one first resource set based on the model indication information. Part or all of the first resource sets in the at least one first resource set associated with at least one AI model are used as the input of the AI model. Part or all of the output information of the AI model may be used as the content of the report information.

For example, the report configuration information includes the indexes of $M$ AI models, or includes an AI model index list with a length of $M$. The model indication information indicates one of the $M$ AI models in the report configuration information. In an embodiment, the length of the model indication information is $\lceil log2(M) \rceil$ bits, and the M states in $\lceil log2(M) \rceil$ correspond to the $M$ AI models respectively. Alternatively, the model indication information indicates multiple AI models in the $M$ AI models in the report configuration information. In an embodiment, the length of the model indication information is $M$ bits, and each bit corresponds to an AI model. The terminal may determine the one or more AI models to be used through the model indication information.

(3) Joint inference is performed using multiple AI models, and the multiple AI models are cascaded.

The multiple AI models associated with the at least one first resource set, or the multiple AI models indicated by the model indication information, may perform inference in a cascade manner. For example, the report configuration information includes the indexes of $M$ AI models and the indexes of $N$ first resource sets. The $M$ AI models are cascaded for performing inference, where the input of the first AI model is part or all of the first resource sets in the $N$ first resource sets, and the input of the $(m + n)$-th AI model includes part or all of the output information of the $m$-th to $(m + n - 1)$-th AI models, where, $m = 1, 2, \cdots M-1$, $n$ is a predefined or configured positive integer, $m + n$ is an integer from 2 to $M$, and $M$ is the quantity of the multiple AI models used for inference, or the quantity of the multiple AI models indicated by the model indication information. The report information includes part or all of the output information of a last AI model among the multiple AI models constituting the cascade.

It is assumed that the value of $n$ is 1. FIG. 4 is a schematic structural diagram of cascade AI models according to an embodiment of the present application. As shown in FIG. 4, the input of the $(m + 1)$-th AI model includes part of the output information of the $m$-th AI model (the solid arrow part in FIG. 4). In another implementation, the input of the $(m + 1)$-th AI model may include all of the output information of the $m$-th AI model. In addition to including part of the output information of the $m$-th AI model, the input of the $(m + 1)$-th AI model also includes other information (the dotted arrow part below the model in FIG. 4). In another implementation, the input of the $(m + 1)$-th AI model only includes part or all of the output information of the $m$-th AI model. Only part or all of the output information of the last AI model is required as the content of the report information.

(4) Multiple AI models are used for inference separately, and the multiple AI models are in parallel.

The multiple AI models associated with the at least one first resource set are in parallel, and the input of each AI model in parallel includes part or all of the first resource set in the at least one first resource set. Alternatively, the multiple AI models indicated by the model indication information are in parallel, and the input of each AI model in parallel includes part or all of the first resource set in the at least one first resource set. The report information includes part or all of the output information of each AI model in the multiple AI models in parallel.

In an embodiment, the input of each of the AI models in parallel may be the first resource set associated with the AI model.

In an embodiment, the input of each AI model may be only one measurement resource set. FIG. 5 is a first schematic structural diagram of parallel AI models according to an embodiment of the present application. As shown in FIG. 5, the measurement resource set with an index of 0 (CSI-ResourceConfig#0) is used as the input of the AI model with an index of 0 (AI Model#0), and the measurement resource set with an index of 1 (CSI-ResourceConfig#1) is used as the input of the AI model with an index of 5 (AI Model#5). In an embodiment, the input of each AI model is a measurement resource set, and there is no overlap between the measurement resource sets for the input of each AI model.

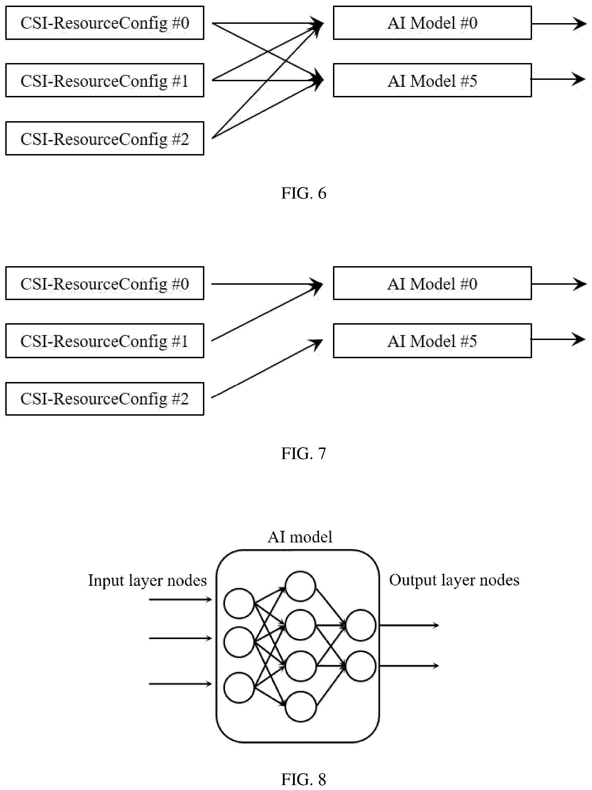

In an embodiment, the input of each AI model is all of the at least one measurement resource set associated with at least one AI model. FIG. 6 is a second schematic structural diagram of parallel AI models according to an embodiment of the present application. As shown in FIG. 6, the measurement resource sets with indexes 0, 1 and 2 (CSI-Resource-Config#0, CSI-ResourceConfig#1 and CSI-ResourceConfig#2) are associated with the AI models with indexes 0 and 5 (AI Model#5, AI Model#0). In an embodiment, the input of each AI model is all the measurement resource sets.

In an embodiment, the input of each AI model is a part of the at least one measurement resource set associated with the at least one AI model. FIG. 7 is a third schematic structural diagram of parallel AI models according to an embodiment of the present application. As shown in FIG. 7, the measurement resource sets with indexes 0, 1 and 2 (CSI-ResourceConfig#0, CSI-ResourceConfig#1 and CSI-ResourceConfig#2) are associated with the AI models with indexes 0 and 5 (AI Model#5, AI Model#0). The input of the AI model with index 0 is the measurement resource sets with indexes 0 and 1, and the input of the AI model with index 5 is the measurement resource set with index 2. In an embodiment, the input of each AI model is one or more measurement resource sets, and there is no overlap between the measurement resources for the input of each AI model.

In an embodiment, there is no overlap between the first resource sets for the input of each of the AI models in parallel. For AI models in parallel, there is no overlap between the measurement resource sets for the input of each AI model, which may simplify the complexity of AI inference.

In an embodiment, the model indication information and/or the input information and the output information of each of the AI models is determined based on at least one of the following:

pre-definition in a protocol;

a radio resource control (RRC) message configuration;

a media access control control element (MAC CE) indication; or

a downlink control information (DCI) indication.

In an embodiment, the aforementioned model indication information, as well as the content of the input information and the output information of the AI model used in the procedure of determining the report information, may be predefined by a protocol. It may also be semi-statically configured by a higher layer signaling, such as RRC message configuration. It may also be dynamically indicated by dedicated indication information, such as MAC CE indication, or DCI indication.

In an embodiment, the output information of the AI model in the report information includes at least one of the following:

first channel state information of the first resource set;

second channel state information of a second resource set, where the second resource set corresponds to the output information of the AI model in the report information;

identifiers of part of output layer nodes of the AI model and/or output values of the part of output layer nodes, where the identifiers and/or output values of the part of output layer nodes satisfy a given condition; or

output values of all of output layer nodes of the AI model.

In an embodiment, the content of the output information of the AI model included in the report information is described below.

① The identifiers of part of output layer nodes of the AI model and/or the output values of the part of output layer nodes.

The report information includes relevant information of part of output layer nodes, such as the output values and identifiers of the part of output layer nodes. The part of output layer nodes are output layer nodes that satisfy the given condition and are determined from all of the output layer nodes based on a predefined or configured manner. For example, it is indicated by configuration that the report information needs to include relevant information of K output layer nodes with the largest or smallest output values, or relevant information of output layer nodes with output values greater than or less than a certain threshold value. For another example, it is predefined that the report information needs to include relevant information of output layer nodes with an odd identifier. For another example, it is indicated by configuration that the report information needs to include relevant information of $K$ output layer nodes with an odd identifier and the largest or smallest output value. The value of $K$ is predefined or configured, and the value range of $K$ is greater than or equal to 1, and less than or equal to the total quantity of output layer nodes.

② The output values of all of output layer nodes of the AI model.

Since the report information includes relevant information of all of output layer nodes, there is no need to report the identifiers of the output layer nodes. The output values of all output layer nodes may be reported in a predefined order, for example, in the order of the index of the output layer nodes from small to large.

FIG. 8 is a schematic structural diagram of input layer nodes and output layer nodes of an AI model according to an embodiment of the present application. As shown in FIG. 8, there are two output layer nodes of the AI model, and the report information may include the output values of the two output layer nodes, or may include only the identifier and output value of one of the output layer nodes.

③ The first channel state information of the first resource set.

The first resource set is a measurement resource set. In case that the AI model performs inference on the measurement resource set, the report information includes the first channel state information of the measurement resource set. For example, a first CSI-RS set is used as an input, and the output information of the AI model is the relevant information of the first CSI set. For example, the first CSI-RS set is used as an input, and the output information of the AI model is the relevant information of the first CSI set and a second CSI set.

④ The second channel state information of the second resource set. The second resource set corresponds to the output information of the AI model.

The resource set corresponding to the output information of the AI model included in the report information may be defined as the inference resource set, that is, the second resource set. The inference resource set may be the same as the measurement resource set (the measurement resource set is input, and the relevant information of the measurement resource set is output). The inference resource set and the measurement resource set may be completely different (the measurement resource set is input, and the relevant information of the unmeasured resource set is output). The measurement resource set may also be a subset of the inference resource set (the measurement resource set is input, and the relevant information of the measurement resource set and the unmeasured resource set is output).

The inference resource set may be implicitly determined, for example, the output information of the AI model is considered to be the relevant information of the inference resource set. The inference resource set may also be explicitly determined, for example, it is indicated through the inference resource indication information that the resources corresponding to the output information of the AI model are the inference resource set.

In the method for measurement report provided by the embodiments of the present application, the AI model is used to obtain one or more of the channel state information of the measurement resource set, the channel state information of the unmeasured resource, the output values and identifiers of part of output layer nodes, and the output values of all of output layer nodes, and the network device may use the report information to perform resource scheduling, which, by using the AI model, improves the accuracy of measurement and management, reduces the overhead of measurement resources, and shortens the measurement cycle.

In an embodiment, the second resource set is different from the first resource set in at least one of the following:

a type of resource set is different;

a type of reference signal is different;

a reference signal is different;

a time domain resource for transmission is different;

a frequency domain resource for transmission is different;

a transmission port is different;

a transmission beam is different;

a reception beam is different;

the first resource set and the second resource set are independently configured; or,

the first resource set is a subset of the second resource set.

In an embodiment, the case where the first resource set (the measurement resource set) and the second resource set (the inference resource set) are different includes: the type of resource set is different, the type of reference signal is different, the time domain/frequency domain resource for transmission is different, the transmission port is different, the transmission/reception beam is different, the first resource set and the second resource set are independently configured, or the first resource set is a subset of the second resource set.

For example, the measurement resource set used as an input is the first CSI-RS set, and the output information of the AI inference model is the relevant information of the second CSI-RS set, where the index of CSI-RS included in the first CSI-RS set and the index of CSI-RS included in the second CSI-RS set are different, or the time domain/frequency domain/port/ transmission beam/reception beam is different, or the first CSI-RS set and the second CSI-RS set are independently configured. For example, the second CSI-RS set is an unmeasured resource set. In an embodiment, the first CSI-SR set is a subset of the second CSI-RS set. In this case, the reference signals of the measurement resource set and the inference resource set are different.

For example, the measurement resource set used as an input is a first synchronization signal block (SSB) set, and the output information of the AI inference model is the relevant information of the second CSI-RS set. In this case, types of reference signals of the measurement resource set and the inference resource set are different.

For example, the measurement resource set used as an input is the first CSI-RS set, and the output information of the AI inference model is the relevant information of the interference measurement resource set. In this case, resource set types of the measurement resource set and the inference resource set are different.

In the method for measurement report provided by the embodiments of the present application, the relevant information of unmeasured resource sets other than the measurement resource set may be obtained by using the AI model. By using the AI model, the accuracy of measurement and management is improved, the overhead of measurement resource is reduced, and the measurement cycle is shortened.

In an embodiment, the second channel state information of the second resource set includes at least one of the following:

identifiers of $K$ resources satisfying the given condition in the second resource set;

confidence or probability corresponding to $K$ resources;

inference reference signal received power (RSRP) corresponding to $K$ resources;

inference reference signal received quality (RSRQ) corresponding to $K$ resources; or,

inference signal to interference and noise ratio (SINR) corresponding to $K$ resources;

where $K$ is a predefined or configured positive integer, and a value of $K$ does not exceed a quantity of the second resource sets.

In an embodiment, the second channel state information of the second resource set includes one or more of the following: the identifiers of $K$ inference resources satisfying the given condition in the second resource set ($K$ is a predefined or configured positive integer, such as $K = 1$, $K = 2$, etc., and in case that the network device needs to obtain all information of the second resource set output by the AI model, $K$ is equal to the quantity of the universal of inference resource set), and/or the following information corresponding to each resource of the $K$ resources: probability/confidence (probability that each resource in the output information satisfies the given condition), inference RSRP, inference RSRQ, and inference SINR, etc.

The $K$ resources that satisfy the given condition may be the $K$ resources with the best/worst RSRP/RSRQ/SINR inferred by the AI inference model, or the $K$ resources in the inference resource set with a high probability/confidence that are expected to be the best/worst inference resources (such as the optimal beam). This is not limited in the embodiments of the present application.

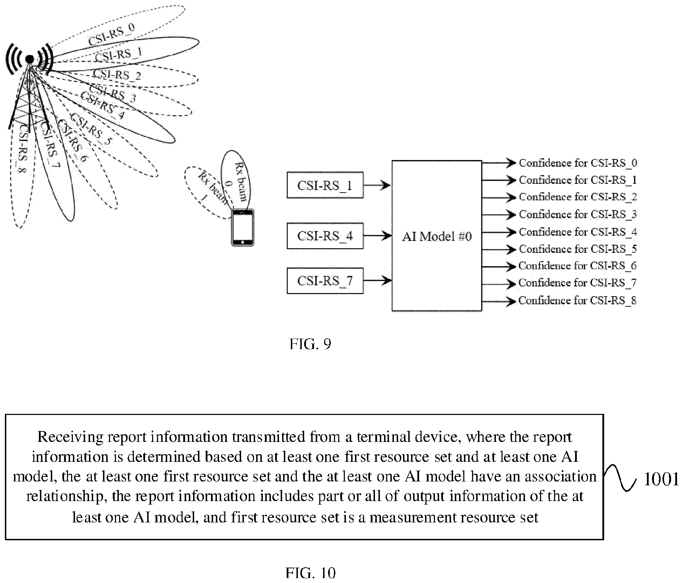

FIG. 9 is a second schematic flowchart of a method for measurement report according to an embodiment of the present application. As shown in FIG. 9, the measurement resource set is {CSI-RS_1, CSI-RS_4, CSI-RS_7} (corresponding to the solid line ellipses of the base station portion in FIG. 9), and the measurement resource set is used as the input of the AI model with an index of 0 (AI Model#0) associated therewith. The output layer of the AI model has a total of 9 nodes, and the output information of the 9 output layer nodes corresponds to the confidence or probability that the beam corresponding to each inference resource in the inference resource set {CSI-RS_0, CSI-RS_1, CSI-RS_2, CSI-RS_3, CSI-RS_4, CSI-RS_5, CSI-RS_6, CSI-RS_7, CSI-RS_8} is the optimal beam.

In FIG. 9, the measurement resource set is a subset of the inference resource set. It is assumed that the report information includes the index of $K = 1$ inference resource with the optimal beam in the inference resource set and the corresponding confidence. For example, the report information includes {CSI-RS_5, 0.9}, which means that the inference resource corresponding to the optimal beam inferred by the AI inference model is CSI-RS_5, and the corresponding confidence is 0.9. For example, the report information only needs to include the index of the inference resource with the optimal beam in the inference resource set, and the report information only includes {CSI-RS_5}.

The terminal device may determine at least one measurement resource set and at least one AI model associated therewith, and determine one or more AI models to be used and their inputs and outputs. Through the inference of the AI model, only a small quantity of beams (a small quantity of CSI-RSs included in the first CSI-RS set) need to be measured, relevant information about the universal set of beams (a large quantity of CSI-RSs in the second CSI-RS set) may be inferred based on the AI model, and one or more optimal beams obtained by inference may be determined, and then the network device may perform resource scheduling based on the obtained inference results. As such, not only the requirement of high-precision beam management for network device is satisfied, but also the overhead of measurement resources is reduced, and the measurement delay is reduced.

In an embodiment, the first channel state information of the first resource set includes at least one of the following:

a channel estimation result obtained based on the at least one first resource set;

channel estimation result compression information obtained based on the at least one first resource set;

a channel estimation result and channel estimation result compression information obtained based on the at least one first resource set; or,

information for channel estimation or channel recovery corresponding to a resource in the first resource set.

In an embodiment, the first channel state information of the measurement resource set may include one or more of the channel estimation result obtained based on the measurement resource, the channel estimation result compression information obtained based on the measurement resource, or other information associated with the measurement resource for channel estimation or channel recovery, etc.

In an embodiment, the output information of the AI model included in the report information is quantized and/or encoded.

In an embodiment, the report information may include the quantized output information of the AI model. The specific parameters for quantization, such as the quantity of quantization bits and the quantization range, may be predefined, semi-statically configured, or dynamically indicated.

The report information may also include the encoded output information of the AI model, and the specific encoding mode or encoding format may be predefined, semi-statically configured, or dynamically indicated.

The output information of the AI model is quantized or encoded and then reported to the network device, or the output information of the AI model is quantized or encoded before being output. In this case, the inference result of the AI model obtained in the report information does not need to indicate a specific physical meaning, which may further reduce the overhead of measurement resources and reduce measurement delay.

FIG. 10 is a third schematic flowchart of a method for measurement report according to an embodiment of the present application. As shown in FIG. 10, the method is performed by a network device, and the method includes the following steps.

Step 1001: receiving report information transmitted from a terminal device, where the report information is determined based on at least one first resource set and at least one artificial intelligence (AI) model, the at least one first resource set and the at least one AI model have an association relationship, the report information includes part or all of output information of the at least one AI model, and the first resource set is a measurement resource set.

In an embodiment, the network device receives the report information transmitted from the terminal device, and the network device may perform resource scheduling based on the report information. The report information is determined based on the at least one first resource set and the at least one AI model, there is an association relationship between the at least one first resource set and the at least one AI model, and the report information includes part or all of the output information of the at least one AI model. For description of how the terminal device determines the report information, please refer to the aforementioned method embodiment performed by the terminal device, which is not repeated here.

In an embodiment, the association relationship is determined based on at least one of the following:

an index of the at least one first resource set and an index of the at least one AI model are included in same report configuration information;

an index of the at least one first resource set and an index of the at least one AI model satisfy a given relationship; or,

an index of the at least one first resource set and an index of the at least one AI model are indicated by same association indication information.

In an embodiment, a quantity of the at least one first resource set is $N$, a quantity of the at least one AI model is $M$, $N$ and $M$ are both positive integers, and the association relationship includes:

if $N$ is greater than $M$, an $i$-th AI model is associated with first resource sets numbered

$$\left\lfloor \frac{N}{M} \right\rfloor \cdot i, \left\lfloor \frac{N}{M} \right\rfloor \cdot i + 1, ..., \left\lfloor \frac{N}{M} \right\rfloor \cdot (i + 1) - 1$$ , or associated with first resource sets numbered

$$\left\lceil \frac{N}{M} \right\rceil \cdot i, \left\lceil \frac{N}{M} \right\rceil \cdot i + 1, ..., \left\lceil \frac{N}{M} \right\rceil \cdot (i + 1) - 1$$ ;

if *N* is equal to *M,* an *i-th* AI model is associated with an *i-th* first resource set;

if *N* is less than *M,* an *i-th* first resource set is associated with AI models numbered

$$\left\lfloor \frac{M}{N} \right\rfloor \cdot i, \left\lfloor \frac{M}{N} \right\rfloor \cdot i + 1, ..., \left\lfloor \frac{M}{N} \right\rfloor \cdot (i + 1) - 1$$ , or associated with AI models numbered

$$\left\lceil \frac{M}{N} \right\rceil \cdot i, \left\lceil \frac{M}{N} \right\rceil \cdot i + 1, ..., \left\lceil \frac{M}{N} \right\rceil \cdot (i + 1) - 1$$ ;
or,

if *N* is greater than *M,* an AI model with index *j* is associated with first resource sets with indexes of

$$\left\lfloor \frac{N}{M} \right\rfloor \cdot j, \left\lfloor \frac{N}{M} \right\rfloor \cdot j + 1, ..., \left\lfloor \frac{N}{M} \right\rfloor \cdot (j + 1) - 1$$ , or associated with first resource sets with indexes of

$$\left\lceil \frac{N}{M} \right\rceil \cdot j, \left\lceil \frac{N}{M} \right\rceil \cdot j + 1, ..., \left\lceil \frac{N}{M} \right\rceil \cdot (j + 1) - 1$$ ;

if *N* is equal to *M,* an AI model with index *j* is associated with a first resource set with index j;

if *N* is less than *M,* a first resource set with index *j* is associated with AI models with indexes of

$$\left\lfloor \frac{M}{N} \right\rfloor \cdot j, \left\lfloor \frac{M}{N} \right\rfloor \cdot j + 1, ..., \left\lfloor \frac{M}{N} \right\rfloor \cdot (j + 1) - 1$$ , or associated with AI models with indexes of

$$\left\lceil \frac{M}{N} \right\rceil \cdot j, \left\lceil \frac{M}{N} \right\rceil \cdot j + 1, ..., \left\lceil \frac{M}{N} \right\rceil \cdot (j + 1) - 1$$ ;

where ⌈ ⌉ indicates rounding up, ⌊ ⌋ indicates rounding down, *i* is an integer from 1 to *M,* and *j* is an integer from 0 to *M-1.*

In an embodiment, the association indication information is used to indicate indexes of one or more AI models associated with each first resource set, and/or the association indication information is used to indicate one or more first resource sets associated with each AI model.
In an embodiment, determining the report information based on the at least one first resource set and the at least one AI model includes:
determining the report information based on the at least one first resource set and one or more AI models in the at least one AI model.
In an embodiment, determining the report information includes:

determining the report information based on the at least one first resource set and one AI model in the at least one AI model, where an input of the one AI model includes part or all of first resource sets in the at least one first resource set, the report information includes part or all of output information of the one AI model, the one AI model is selected by the terminal device or determined based on model indication information, or the one AI model is the only AI model included in the at least one AI model; or,

determining the report information based on the at least one first resource set and multiple AI models in the at least one AI model, where an input of each AI model among the multiple AI models includes part or all of first resource sets in the at least one first resource set, and the report information includes part or all of output information of the each AI model; or, an input of a first AI model among the multiple AI models includes part or all of first resource sets in the at least one first resource set, an input of an *(m + n)-th* AI model includes part or all of output information of an *m-th* to an *(m + n - 1)-th* AI models, and the report information includes part or all of output information of a last AI model among the multiple AI models, *m = 1, 2,...M-1, n* is a predefined or configured positive integer, *m + n* is an integer from 2 to *M,* and *M* is a quantity of the multiple AI models.

In an embodiment, the model indication information and/or the input information and the output information of each of the AI models is determined based on at least one of the following:

pre-definition in a protocol;

a radio resource control (RRC) message configuration;

a media access control - control element (MAC CE) indication; or

a downlink control information (DCI) indication.

In an embodiment, the output information of the AI model in the report information includes at least one of the following:

first channel state information of the first resource set;

second channel state information of a second resource set, where the second resource set corresponds to the output information of the AI model in the report information;

identifiers of part of output layer nodes of the AI model and/or output values of the part of output layer nodes, where the identifiers and/or output values of the part of output layer nodes satisfy a given condition; or

output values of all of output layer nodes of the AI model.

In an embodiment, the second resource set is different from the first resource set in at least one of the following:

a type of resource set is different;

a type of reference signal is different;

a reference signal is different;

a time domain resource for transmission is different;

a frequency domain resource for transmission is different;

a transmission port is different;

a transmission beam is different;

a reception beam is different;

the first resource set and the second resource set are independently configured; or,

the first resource set is a subset of the second resource set.

In an embodiment, the second channel state information of the second resource set includes at least one of the following:

identifiers of $K$ resources satisfying the given condition in the second resource set;

confidence or probability corresponding to $K$ resources;

inference reference signal received power (RSRP) corresponding to $K$ resources;

inference reference signal received quality (RSRQ) corresponding to $K$ resources; or,

inference signal to interference and noise ratio (SINR) corresponding to $K$ resources;

where *K* is a predefined or configured positive integer, and a value of *K* does not exceed a quantity of the second resource sets.

In an embodiment, the first channel state information of the first resource set includes at least one of the following:

a channel estimation result obtained based on the at least one first resource set;

channel estimation result compression information obtained based on the at least one first resource set;

a channel estimation result and channel estimation result compression information obtained based on the at least one first resource set; or,

information for channel estimation or channel recovery corresponding to a resource in the first resource set.

In an embodiment, the output information of the AI model included in the report information is quantized and/or encoded.

The method for measurement report performed by the network device and the method for measurement report performed by the terminal device are based on the same conception, the prerequisites and beneficial effects of the relevant steps may be referred to each other, and the same part is not repeated here.

The solutions provided by the present application are further described below through two examples.

Example one.

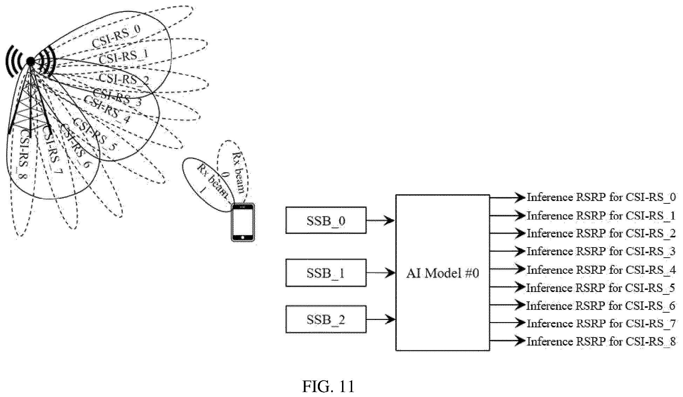

FIG. 11 is a fourth schematic flowchart of a method for measurement report according to an embodiment of the present application. As shown in FIG. 11, the measurement resource set is {SSB_0, SSB_1, SSB_2} (corresponding to the solid line portion of the base station portion in FIG. 11), and the measurement resource set is used as the input of an AI inference model with an index of 0 (AI Model #0) associated therewith. The output layer of the AI model has a total of 9 nodes, and the outputs of the 9 output layer nodes correspond to the inference RSRP of each inference resource in the inference resource set {CSI-RS_0, CSI-RS_1, CSI-RS_2, CSI-RS_3, CSI-RS_4, CSI-RS_5, CSI-RS_6, CSI-RS_7, CSI-RS_8}. The Rx beam of the terminal portion represents different reception beams.

In FIG. 11, the types of reference signal of the measurement resource set and the inference resource set are completely different. Furthermore, it is assumed that the report information includes the RSRP of each inference resource in the inference resource set, for example, the report information is {$RSRP_{CSI-RS\_0}$, $RSRP_{CSI-RS\_1}$, $RSRP_{CSI-RS\_2}$, $RSRP_{CSI-RS\_3}$, $RSRP_{CSI-RS\_4}$, $RSRP_{CSI-RS\_5}$, $RSRP_{CSI-RS\_6}$, $RSRP_{CSI-RS\_7}$, $RSRP_{CSI-RS\_8}$}, which respectively corresponds to the inference RSRP values of the 9 inference resources in the inference resource set.

In example one, through the inference of the AI inference model, the UE only needs to measure a small quantity of wide beams (SSB sets) to obtain relevant information of a large quantity of narrow beams (CSI-RS sets) based on the inference of the AI inference model, such as the RSRP obtained by inference, and report it to the network device, which may not only satisfy the requirement of high-precision beam management for the network device, but also reduce the overhead of measurement resources and reduce measurement delay.

Example two.

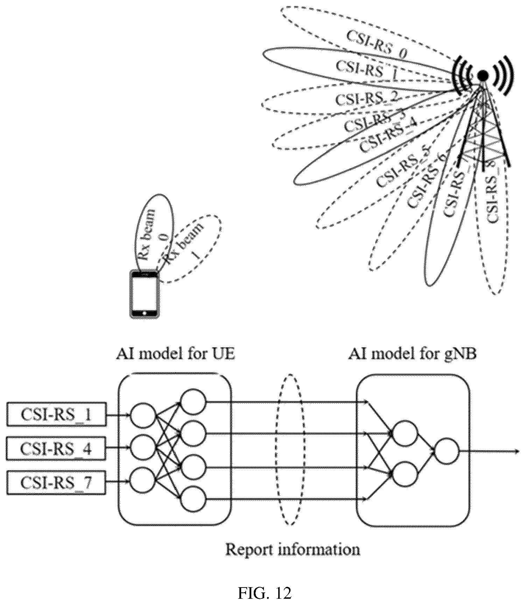

FIG. 12 is a fifth schematic flowchart of a method for measurement report according to an embodiment of the present application. As shown in FIG. 12, the measurement resource set of the terminal is {CSI-RS_1, CSI-RS_4, CSI-RS_7}, and the measurement resource set is used as the input of the AI model associated therewith. The output layer of the AI model includes 4 nodes, and the report information includes the output values of all 4 output layer nodes, and the output values are transmitted by the UE to the base station. The base station uses the report information transmitted from the UE as the input of the AI model on the base station side, and further infers the output information of the AI model. In some embodiments, the report information may only need to include the indexes and corresponding output values of two nodes with the largest output values, for example, including {Index=0, value=0.8; Index=3, value=0.9} (it is assumed that the output values of the nodes with Index=1 and Index=2 are less than 0.8).

The report information includes the quantized output of the AI inference model. The specific parameters for quantization (such as the quantity of quantization bits, the quantization range) may be predefined, configured or indicated by the network device. The report information may also include the encoded output information of the AI model. The specific encoding mode or encoding format may be predefined, semi-statically configured, or dynamically indicated.

In Example two, the UE may determine at least one measurement resource set and at least one AI model associated therewith, and determine the AI model to be used in the at least one associated AI model and its input and output. In particular, the UE does not need to interpret the specific physical meaning of the output of the AI model, but only needs to quantize the output information based on the predefined or configured rules, and then report part or all of the output of the AI model to the network device. As such, the computing load may be reduced and data privacy security is ensured.

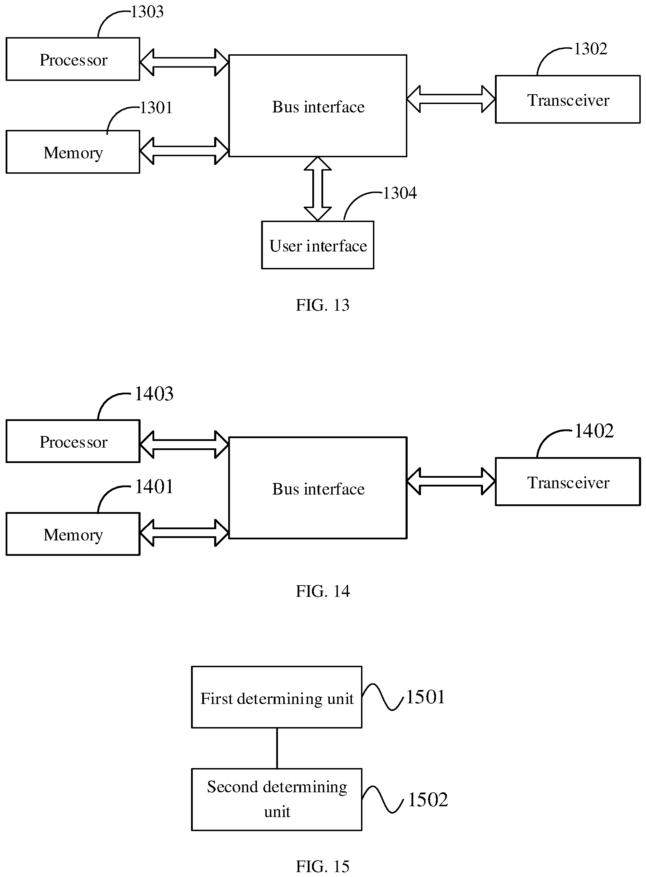

FIG. 13 is a schematic structural diagram of a terminal device according to an embodiment of the present application. As shown in FIG. 13, the terminal device includes a memory 1301, a transceiver 1302 and a processor 1303, where the memory 1301 is used for storing a computer program, and the transceiver 1302 is used for transmitting and receiving data under control of the processor 1303.

In an embodiment, the transceiver 1302 is used for transmitting and receiving data under control of the processor 1303.

In FIG. 13, a bus architecture may include any number of interconnected buses and bridges, which are linked together through various circuits of one or more processors represented by the processor 1303 and one or more memories represented by the memory 1301. The bus architecture may also link together various other circuits, such as peripherals, voltage regulators, and power management circuits, etc., which are well known in the art, and therefore are not further described in the present application. The bus interface provides an interface. The transceiver 1302 may include multiple elements, i.e., including a transmitter and a receiver, units for providing communication with various other devices over transmission media including wireless channels, wired channels, fiber optic cables, and the like. For different user equipment, a user interface 1304 may be an interface capable of externally or internally connecting the required equipment, and the connected equipment includes, but not limited to, a small keypad, a display, a speaker, a microphone, a joystick, and the like.

The processor 1303 is responsible for managing the bus architecture and general processing, and the memory 1301 may store data used by the processor 1303 when performing operations.

In an embodiment, the processor 1303 may be a central processing unit (CPU), an application specific integrated circuit (ASIC), a field-programmable gate array (FPGA), or a complex programmable logic device (CPLD), the processor may also use a multi-core architecture.

The processor is used to execute any of the methods performed by the terminal device provided by the embodiments of the present application based on the executable instructions obtained by calling the computer program stored in the memory. The processor and the memory may also be physically arranged separately.

The processor 1303 is used for reading the computer program in the memory 1301 and performing the following operations:

determining at least one first resource set and at least one artificial intelligence (AI) model having an association relationship with the at least one first resource set, where the first resource set is a measurement resource set; and

determining report information based on the at least one first resource set and the at least one AI model, and transmitting the report information to a network device, where the report information includes part or all of output information of the at least one AI model.

In an embodiment, the association relationship is determined based on at least one of the following:

an index of the at least one first resource set and an index of the at least one AI model are included in same report configuration information;

an index of the at least one first resource set and an index of the at least one AI model satisfy a given relationship; or,

an index of the at least one first resource set and an index of the at least one AI model are indicated by same association indication information.

In an embodiment, a quantity of the at least one first resource set is $N$, a quantity of the at least one AI model is $M$, $N$ and $M$ are both positive integers, and the association relationship includes:

if $N$ is greater than $M$, an $i$-th AI model is associated with first resource sets numbered $\left\lfloor \frac{N}{M} \right\rfloor \cdot i, \left\lfloor \frac{N}{M} \right\rfloor \cdot i + 1, ..., \left\lfloor \frac{N}{M} \right\rfloor \cdot (i+1) - 1$, or associated with first resource sets numbered $\left\lceil \frac{N}{M} \right\rceil \cdot i, \left\lceil \frac{N}{M} \right\rceil \cdot i + 1, ..., \left\lceil \frac{N}{M} \right\rceil \cdot (i+1) - 1$;

if $N$ is equal to $M$, an $i$-$th$ AI model is associated with an $i$-$th$ first resource set;

if $N$ is less than $M$, an $i$-$th$ first resource set is associated with AI models numbered $\left\lceil \frac{M}{N} \right\rceil \cdot i, \left\lceil \frac{M}{N} \right\rceil \cdot i + 1, ..., \left\lceil \frac{M}{N} \right\rceil \cdot (i+1) - 1$ , or associated with AI models numbered $\left\lfloor \frac{M}{N} \right\rfloor \cdot i, \left\lfloor \frac{M}{N} \right\rfloor \cdot i + 1, ..., \left\lfloor \frac{M}{N} \right\rfloor \cdot (i+1) - 1$ ; or,

if $N$ is greater than $M$, an AI model with index $j$ is associated with first resource sets with indexes of $\left\lceil \frac{N}{M} \right\rceil \cdot j, \left\lceil \frac{N}{M} \right\rceil \cdot j + 1, ..., \left\lceil \frac{N}{M} \right\rceil \cdot (j+1) - 1$ , or associated with first resource sets with indexes of $\left\lfloor \frac{N}{M} \right\rfloor \cdot j, \left\lfloor \frac{N}{M} \right\rfloor \cdot j + 1, ..., \left\lfloor \frac{N}{M} \right\rfloor \cdot (j+1) - 1$ ;

if $N$ is equal to $M$, an AI model with index $j$ is associated with a first resource set with index $j$;

if $N$ is less than $M$, a first resource set with index $j$ is associated with AI models with indexes of $\left\lceil \frac{M}{N} \right\rceil \cdot j, \left\lceil \frac{M}{N} \right\rceil \cdot j + 1, ..., \left\lceil \frac{M}{N} \right\rceil \cdot (j+1) - 1$ , or associated with AI models with indexes of $\left\lfloor \frac{M}{N} \right\rfloor \cdot j, \left\lfloor \frac{M}{N} \right\rfloor \cdot j + 1, ..., \left\lfloor \frac{M}{N} \right\rfloor \cdot (j+1) - 1$ ;

where ⌈ ⌉ indicates rounding up, ⌊ ⌋ indicates rounding down, $i$ is an integer from 1 to $M$, and $j$ is an integer from 0 to $M$-1.

In an embodiment, the association indication information is used to indicate indexes of one or more AI models associated with each first resource set, and/or the association indication information is used to indicate one or more first resource sets associated with each AI model.

In an embodiment, determining the report information based on the at least one first resource set and the at least one AI model includes:
determining the report information based on the at least one first resource set and one or more AI models in the at least one AI model.

In an embodiment, determining the report information includes:

determining the report information based on the at least one first resource set and one AI model in the at least one AI model, where an input of the one AI model includes part or all of first resource sets in the at least one first resource set, the report information includes part or all of output information of the one AI model, the one AI model is selected by the terminal device or determined based on model indication information, or the one AI model is the only AI model included in the at least one AI model; or,

determining the report information based on the at least one first resource set and multiple AI models in the at least one AI model, where an input of each AI model among the multiple AI models includes part or all of first resource sets in the at least one first resource set, and the report information includes part or all of output information of the each AI model; or, an input of a first AI model among the multiple AI models includes part or all of first resource sets in the at least one first resource set, an input of an $(m + n)$-$th$ AI model includes part or all of output information of an $m$-$th$ to an $(m + n - 1)$-$th$ AI models, and the report information includes part or all of output information of a last AI model among the multiple AI models, $m = 1, 2,...M$-1, $n$ is a predefined or configured positive integer, $m + n$ is an integer from 2 to $M$, and $M$ is a quantity of the multiple AI models.

In an embodiment, the model indication information and/or the input information and the output information of each AI model is determined based on at least one of the following:

pre-definition in a protocol;

a radio resource control (RRC) message configuration;

a media access control - control element (MAC CE) indication; or

a downlink control information (DCI) indication.

In an embodiment, the output information of the AI model in the report information includes at least one of the following:

first channel state information of the first resource set;

second channel state information of a second resource set, where the second resource set corresponds to the output information of the AI model in the report information;

identifiers of part of output layer nodes of the AI model and/or output values of the part of output layer nodes, where the identifiers and/or output values of the part of output layer nodes satisfy a given condition; or

output values of all of output layer nodes of the AI model.

In an embodiment, the second resource set is different from the first resource set in at least one of the following:

a type of resource set is different;

a type of reference signal is different;

a reference signal is different;

a time domain resource for transmission is different;

a frequency domain resource for transmission is different;

a transmission port is different;

a transmission beam is different;

a reception beam is different;

the first resource set and the second resource set are independently configured; or,

the first resource set is a subset of the second resource set.

In an embodiment, the second channel state information of the second resource set includes at least one of the following:

identifiers of $K$ resources satisfying the given condition in the second resource set;

confidence or probability corresponding to $K$ resources;

inference reference signal received power (RSRP) corresponding to $K$ resources;

inference reference signal received quality (RSRQ) corresponding to $K$ resources; or,

inference signal to interference and noise ratio (SINR) corresponding to $K$ resources;

where $K$ is a predefined or configured positive integer, and a value of $K$ does not exceed a quantity of the second resource sets.

In an embodiment, the first channel state information of the first resource set includes at least one of the following:

a channel estimation result obtained based on the at least one first resource set;

channel estimation result compression information obtained based on the at least one first resource set;

a channel estimation result and channel estimation result compression information obtained based on the at least one first resource set; or,

information for channel estimation or channel recovery corresponding to a resource in the first resource set.

In an embodiment, the output information of the AI model included in the report information is quantized and/or encoded information.

It should be noted here that the above terminal device provided by the embodiments of the present application may implement all the method steps implemented by the above method embodiments performed by the terminal device, and may achieve the same effect. The same parts and beneficial effects as the same method embodiments are not repeated in the present application.

FIG. 14 is a schematic structural diagram of a network device according to an embodiment of the present application. As shown in FIG. 14, the network device includes a memory 1401, a transceiver 1402 and a processor 1403, where the memory 1401 is used for storing a computer program, the transceiver 1402 is used for transmitting and receiving data under control of the processor 1403.

In an embodiment, the transceiver 1402 is used for transmitting and receiving data under control of the processor 1403.

In FIG. 14, a bus architecture may include any number of interconnected buses and bridges, which are linked together through various circuits of one or more processors represented by the processor 1403 and one or more memories represented by the memory 1401. The bus architecture may also link together various other circuits, such as peripherals, voltage regulators, and power management circuits, etc., which are well known in the art, and therefore are not further described in the present application. The bus interface provides an interface. The transceiver 1402 may include multiple elements, i.e., including a transmitter and a receiver, units for providing communication with various other devices over transmission media including wireless channels, wired channels, fiber optic cables, and the like. The processor 1403 is responsible for managing the bus architecture and general processing, and the memory 1401 may store data used by the processor 1403 when performing operations.

The processor 1403 may be a central processing unit (CPU), an application specific integrated circuit (ASIC), a field-programmable gate array (FPGA), or a complex programmable logic device (CPLD), the processor may also use a multi-core architecture.

The processor 1403 is used for reading the computer program in the memory 1401 and performing the following operations:

receiving report information transmitted from a terminal device, where the report information is determined based on at least one first resource set and at least one artificial intelligence (AI) model, the at least one first resource set and the at least one AI model have an association relationship, the report information includes part or all of output information of the at least one AI model, and the first resource set is a measurement resource set.

In an embodiment, the association relationship is determined based on at least one of the following:

an index of the at least one first resource set and an index of the at least one AI model are included in same report configuration information;

an index of the at least one first resource set and an index of the at least one AI model satisfy a given relationship; or,

an index of the at least one first resource set and an index of the at least one AI model are indicated by same association indication information.

In an embodiment, a quantity of the at least one first resource set is *N,* a quantity of the at least one AI model is *M, N and M* are both positive integers, and the association relationship includes:

if *N* is greater than *M,* an *i-th* AI model is associated with first resource sets numbered $\left\lfloor \frac{N}{M} \right\rfloor \cdot i, \left\lfloor \frac{N}{M} \right\rfloor \cdot i + 1, ..., \left\lfloor \frac{N}{M} \right\rfloor \cdot (i+1) - 1$, or associated with first resource sets numbered $\left\lceil \frac{N}{M} \right\rceil \cdot i, \left\lceil \frac{N}{M} \right\rceil \cdot i + 1, ..., \left\lceil \frac{N}{M} \right\rceil \cdot (i+1) - 1$;

if *N* is equal to *M,* an *i-th* AI model is associated with an *i-th* first resource set;

if $N$ is less than $M,$ an $i$-th first resource set is associated with AI models numbered $\left\lceil \frac{M}{N} \right\rceil \cdot i, \left\lceil \frac{M}{N} \right\rceil \cdot i + 1, ..., \left\lceil \frac{M}{N} \right\rceil \cdot (i+1) - 1$, or associated with AI models numbered $\left\lfloor \frac{M}{N} \right\rfloor \cdot i, \left\lfloor \frac{M}{N} \right\rfloor \cdot i + 1, ..., \left\lfloor \frac{M}{N} \right\rfloor \cdot (i+1) - 1$; or,

if $N$ is greater than $M,$ an AI model with index $j$ is associated with first resource sets with indexes of $\left\lceil \frac{N}{M} \right\rceil \cdot j, \left\lceil \frac{N}{M} \right\rceil \cdot j + 1, ..., \left\lceil \frac{N}{M} \right\rceil \cdot (j+1) - 1$, or associated with first resource sets with indexes of $\left\lfloor \frac{N}{M} \right\rfloor \cdot j, \left\lfloor \frac{N}{M} \right\rfloor \cdot j + 1, ..., \left\lfloor \frac{N}{M} \right\rfloor \cdot (j+1) - 1$;

if $N$ is equal to $M,$ an AI model with index j is associated with a first resource set with index $j;$

if $N$ is less than $M,$ a first resource set with index $j$ is associated with AI models with indexes of $\left\lceil \frac{M}{N} \right\rceil \cdot j, \left\lceil \frac{M}{N} \right\rceil \cdot j + 1, ..., \left\lceil \frac{M}{N} \right\rceil \cdot (j+1) - 1$, or associated with AI models with indexes of $\left\lfloor \frac{M}{N} \right\rfloor \cdot j, \left\lfloor \frac{M}{N} \right\rfloor \cdot j + 1, ..., \left\lfloor \frac{M}{N} \right\rfloor \cdot (j+1) - 1$;

where $\lceil \ \rceil$ indicates rounding up, $\lfloor \ \rfloor$ indicates rounding down, $i$ is an integer from 1 to $M,$ and $j$ is an integer from 0 to $M$-1.

In an embodiment, the association indication information is used to indicate indexes of one or more AI models associated with each first resource set, and/or the association indication information is used to indicate one or more first resource sets associated with each AI model.

In an embodiment, determining the report information based on the at least one first resource set and the at least one AI model includes:
determining the report information based on the at least one first resource set and one or more AI models in the at least one AI model.

In an embodiment, determining the report information includes:

determining the report information based on the at least one first resource set and one AI model in the at least one AI model, where an input of the one AI model includes part or all of first resource sets in the at least one first resource set, the report information includes part or all of output information of the one AI model, the one AI model is selected by the terminal device or determined based on model indication information, or the one AI model is the only AI model included in the at least one AI model; or,

determining the report information based on the at least one first resource set and multiple AI models in the at least one AI model, where an input of each AI model among the multiple AI models includes part or all of first resource sets in the at least one first resource set, and the report information includes part or all of output information of the each AI model; or, an input of a first AI model among the multiple AI models includes part or all of first resource sets in the at least one first resource set, an input of an $(m + n)$-th AI model includes part or all of output information of an $m$-th to an $(m + n - 1)$-th AI models, and the report information includes part or all of output information of a last AI model among the multiple AI models, $m = 1, 2,...M$-1, $n$ is a predefined or configured positive integer, $m + n$ is an integer from 2 to $M,$ and $M$ is a quantity of the multiple AI models.

In an embodiment, the model indication information and/or the input information and the output information of each AI model is determined based on at least one of the following:

pre-definition in a protocol;

a radio resource control (RRC) message configuration;

a media access control - control element (MAC CE) indication; or

a downlink control information (DCI) indication.

In an embodiment, the output information of the AI model in the report information includes at least one of the following:

first channel state information of the first resource set;

second channel state information of a second resource set, where the second resource set corresponds to the output information of the AI model in the report information;

identifiers of part of output layer nodes of the AI model and/or output values of the part of output layer nodes, where the identifiers and/or output values of the part of output layer nodes satisfy a given condition; or

output values of all of output layer nodes of the AI model.

In an embodiment, the second resource set is different from the first resource set in at least one of the following:

a type of resource set is different;

a type of reference signal is different;

a reference signal is different;

a time domain resource for transmission is different;

a frequency domain resource for transmission is different;

a transmission port is different;

a transmission beam is different;

a reception beam is different;

the first resource set and the second resource set are independently configured; or,

the first resource set is a subset of the second resource set.

In an embodiment, the second channel state information of the second resource set includes at least one of the following:

identifiers of $K$ resources satisfying the given condition in the second resource set;

confidence or probability corresponding to $K$ resources;

inference reference signal received power (RSRP) corresponding to $K$ resources;

inference reference signal received quality (RSRQ) corresponding to $K$ resources; or,

inference signal to interference and noise ratio (SINR) corresponding to $K$ resources;

where $K$ is a predefined or configured positive integer, and a value of $K$ does not exceed a quantity of the second resource sets.

In an embodiment, the first channel state information of the first resource set includes at least one of the following:

a channel estimation result obtained based on the at least one first resource set;

channel estimation result compression information obtained based on the at least one first resource set;

a channel estimation result and channel estimation result compression information obtained based on the at least one first resource set; or,

information for channel estimation or channel recovery corresponding to a resource in the first resource set.

In an embodiment, the output information of the AI model included in the report information is quantized and/or encoded information.

It should be noted here that the above network device provided by the embodiments of the present application may implement all the method steps implemented by the above method embodiments performed by the network device, and may achieve the same effect. The same parts and beneficial effects as the same method embodiments are not repeated in the present application.

FIG. 15 is a first schematic structural diagram of an apparatus for measurement report according to an embodiment of the present application. As show in FIG. 15, the apparatus at least includes:

a first determining unit 1501, used for determining at least one first resource set and at least one artificial intelligence (AI) model having an association relationship with the at least one first resource set, where the first resource set is a measurement resource set; and

a second determining unit 1502, used for determining report information based on the at least one first resource set and the at least one AI model, and transmitting the report information to a network device, where the report information includes part or all of output information of the at least one AI model.

In an embodiment, the association relationship is determined based on at least one of the following:

an index of the at least one first resource set and an index of the at least one AI model are included in same report configuration information;

an index of the at least one first resource set and an index of the at least one AI model satisfy a given relationship; or,

an index of the at least one first resource set and an index of the at least one AI model are indicated by same association indication information.

In an embodiment, a quantity of the at least one first resource set is *N*, a quantity of the at least one AI model is *M, N and M* are both positive integers, and the association relationship includes:

if *N* is greater than *M*, an *i-th* AI model is associated with first resource sets numbered $\left\lfloor \frac{N}{M} \right\rfloor \cdot i, \left\lfloor \frac{N}{M} \right\rfloor \cdot i + 1, ..., \left\lfloor \frac{N}{M} \right\rfloor \cdot (i+1) - 1$, or associated with first resource sets numbered $\left\lceil \frac{N}{M} \right\rceil \cdot i, \left\lceil \frac{N}{M} \right\rceil \cdot i + 1, ..., \left\lceil \frac{N}{M} \right\rceil \cdot (i+1) - 1$;

if *N* is equal to *M*, an *i-th* AI model is associated with an *i-th* first resource set;

if *N* is less than *M*, an *i-th* first resource set is associated with AI models numbered $\left\lfloor \frac{M}{N} \right\rfloor \cdot i, \left\lfloor \frac{M}{N} \right\rfloor \cdot i + 1, ..., \left\lfloor \frac{M}{N} \right\rfloor \cdot (i+1) - 1$, or associated with AI models numbered $\left\lceil \frac{M}{N} \right\rceil \cdot i, \left\lceil \frac{M}{N} \right\rceil \cdot i + 1, ..., \left\lceil \frac{M}{N} \right\rceil \cdot (i+1) - 1$; or,

if *N* is greater than *M*, an AI model with index *j* is associated with first resource sets with indexes of $\left\lfloor \frac{N}{M} \right\rfloor \cdot j, \left\lfloor \frac{N}{M} \right\rfloor \cdot j + 1, ..., \left\lfloor \frac{N}{M} \right\rfloor \cdot (j+1) - 1$, or associated with first resource sets with indexes of $\left\lceil \frac{N}{M} \right\rceil \cdot j, \left\lceil \frac{N}{M} \right\rceil \cdot j + 1, ..., \left\lceil \frac{N}{M} \right\rceil \cdot (j+1) - 1$;

if *N* is equal to *M,* an AI model with index *j* is associated with a first resource set with index *j;*

if *N* is less than *M,* a first resource set with index *j* is associated with AI models with indexes of

$$\left\lfloor \frac{M}{N} \right\rfloor \cdot j, \left\lfloor \frac{M}{N} \right\rfloor \cdot j + 1, ..., \left\lfloor \frac{M}{N} \right\rfloor \cdot (j+1) - 1$$ , or associated with AI models with indexes of

$$\left\lceil \frac{M}{N} \right\rceil \cdot j, \left\lceil \frac{M}{N} \right\rceil \cdot j + 1, ..., \left\lceil \frac{M}{N} \right\rceil \cdot (j+1) - 1$$ ;

where ⌈ ⌉ indicates rounding up, ⌊ ⌋ indicates rounding down, *i* is an integer from 1 to *M,* and *j* is an integer from 0 to *M-1.*

In an embodiment, the association indication information is used to indicate indexes of one or more AI models associated with each first resource set, and/or the association indication information is used to indicate one or more first resource sets associated with each AI model.

In an embodiment, the second determining unit is further used for:
determining the report information based on the at least one first resource set and one or more AI models in the at least one AI model.

In an embodiment, the second determining unit is further used for:

determining the report information based on the at least one first resource set and one AI model in the at least one AI model, where an input of the one AI model includes part or all of first resource sets in the at least one first resource set, the report information includes part or all of output information of the one AI model, the one AI model is selected by a terminal device or determined based on model indication information, or the one AI model is the only AI model included in the at least one AI model; or,

determining the report information based on the at least one first resource set and multiple AI models in the at least one AI model, where an input of each AI model among the multiple AI models includes part or all of first resource sets in the at least one first resource set, and the report information includes part or all of output information of the each AI model; or, an input of a first AI model among the multiple AI models includes part or all of first resource sets in the at least one first resource set, an input of an *(m + n)-th* AI model includes part or all of output information of an *m-th* to an *(m + n - 1)-th* AI models, and the report information includes part or all of output information of a last AI model among the multiple AI models, *m = 1, 2,...M-1, n is* a predefined or configured positive integer, *m + n* is an integer from 2 to *M,* and *M* is a quantity of the multiple AI models.

In an embodiment, the model indication information and/or the input information and the output information of each AI model is determined based on at least one of the following:

pre-definition in a protocol;

a radio resource control (RRC) message configuration;

a media access control - control element (MAC CE) indication; or

a downlink control information (DCI) indication.

In an embodiment, the output information of the AI model in the report information includes at least one of the following:

first channel state information of the first resource set;

second channel state information of a second resource set, where the second resource set corresponds to the output information of the AI model in the report information;

identifiers of part of output layer nodes of the AI model and/or output values of the part of output layer nodes, where the identifiers and/or output values of the part of output layer nodes satisfy a given condition; or

output values of all of output layer nodes of the AI model.

In an embodiment, the second resource set is different from the first resource set in at least one of the following:

a type of resource set is different;

a type of reference signal is different;

a reference signal is different;

a time domain resource for transmission is different;

a frequency domain resource for transmission is different;

a transmission port is different;

a transmission beam is different;

a reception beam is different;

the first resource set and the second resource set are independently configured; or,

the first resource set is a subset of the second resource set.

In an embodiment, the second channel state information of the second resource set includes at least one of the following:

identifiers of $K$ resources satisfying the given condition in the second resource set;

confidence or probability corresponding to $K$ resources;

inference reference signal received power (RSRP) corresponding to $K$ resources;

inference reference signal received quality (RSRQ) corresponding to $K$ resources; or,

inference signal to interference and noise ratio (SINR) corresponding to $K$ resources;

where $K$ is a predefined or configured positive integer, and a value of $K$ does not exceed a quantity of the second resource sets.

In an embodiment, the first channel state information of the first resource set includes at least one of the following:

a channel estimation result obtained based on the at least one first resource set;

channel estimation result compression information obtained based on the at least one first resource set;

a channel estimation result and channel estimation result compression information obtained based on the at least one first resource set; or,

information for channel estimation or channel recovery corresponding to a resource in the first resource set.

In an embodiment, the output information of the AI model included in the report information is quantized and/or encoded information.

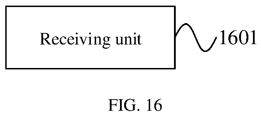

FIG. 16 is a second schematic structural diagram of an apparatus for measurement report according to an embodiment of the present application. As shown in FIG. 16, the apparatus at least includes:

a receiving unit 1601, used for receiving report information transmitted from a terminal device, where the report information is determined based on at least one first resource set and at least one artificial intelligence (AI) model, the at least one first resource set and the at least one AI model have an association relationship, the report information includes part or all of output information of the at least one AI model, and the first resource set is a measurement resource set.

In an embodiment, the association relationship is determined based on at least one of the following:

an index of the at least one first resource set and an index of the at least one AI model are included in same report configuration information;

an index of the at least one first resource set and an index of the at least one AI model satisfy a given relationship; or,

an index of the at least one first resource set and an index of the at least one AI model are indicated by same association indication information.

In an embodiment, a quantity of the at least one first resource set is $N$, a quantity of the at least one AI model is $M$, $N$ and $M$ are both positive integers, and the association relationship includes:

if $N$ is greater than $M$, an $i$-th AI model is associated with first resource sets numbered $\left\lfloor \frac{N}{M} \right\rfloor \cdot i, \left\lfloor \frac{N}{M} \right\rfloor \cdot i + 1, ..., \left\lfloor \frac{N}{M} \right\rfloor \cdot (i+1) - 1$, or associated with first resource sets numbered $\left\lceil \frac{N}{M} \right\rceil \cdot i, \left\lceil \frac{N}{M} \right\rceil \cdot i + 1, ..., \left\lceil \frac{N}{M} \right\rceil \cdot (i+1) - 1$;

if $N$ is equal to $M$, an $i$-th AI model is associated with an $i$-th first resource set;

if $N$ is less than $M$, an $i$-th first resource set is associated with AI models numbered $\left\lfloor \frac{M}{N} \right\rfloor \cdot i, \left\lfloor \frac{M}{N} \right\rfloor \cdot i + 1, ..., \left\lfloor \frac{M}{N} \right\rfloor \cdot (i+1) - 1$, or associated with AI models numbered $\left\lceil \frac{M}{N} \right\rceil \cdot i, \left\lceil \frac{M}{N} \right\rceil \cdot i + 1, ..., \left\lceil \frac{M}{N} \right\rceil \cdot (i+1) - 1$;

or,

if $N$ is greater than $M$, an AI model with index $j$ is associated with first resource sets with indexes of $\left\lfloor \frac{N}{M} \right\rfloor \cdot j, \left\lfloor \frac{N}{M} \right\rfloor \cdot j + 1, ..., \left\lfloor \frac{N}{M} \right\rfloor \cdot (j+1) - 1$, or associated with first resource sets with indexes of $\left\lceil \frac{N}{M} \right\rceil \cdot j, \left\lceil \frac{N}{M} \right\rceil \cdot j + 1, ..., \left\lceil \frac{N}{M} \right\rceil \cdot (j+1) - 1$;

if $N$ is equal to $M$, an AI model with index $j$ is associated with a first resource set with index $j$;

if $N$ is less than $M$, a first resource set with index $j$ is associated with AI models with indexes of $\left\lfloor \frac{M}{N} \right\rfloor \cdot j, \left\lfloor \frac{M}{N} \right\rfloor \cdot j + 1, ..., \left\lfloor \frac{M}{N} \right\rfloor \cdot (j+1) - 1$, or associated with AI models with indexes of $\left\lceil \frac{M}{N} \right\rceil \cdot j, \left\lceil \frac{M}{N} \right\rceil \cdot j + 1, ..., \left\lceil \frac{M}{N} \right\rceil \cdot (j+1) - 1$;

where $\lceil \ \rceil$ indicates rounding up, $\lfloor \ \rfloor$ indicates rounding down, $i$ is an integer from 1 to $M$, and $j$ is an integer from 0 to $M-1$.

In an embodiment, the association indication information is used to indicate indexes of one or more AI models associated with each first resource set, and/or the association indication information is used to indicate one or more first resource sets associated with each AI model.

In an embodiment, determining the report information based on the at least one first resource set and the at least one AI model includes:

determining the report information based on the at least one first resource set and one or more AI models in the at least one AI model.

In an embodiment, determining the report information includes:

determining the report information based on the at least one first resource set and one AI model in the at least one AI model, where an input of the one AI model includes part or all of first resource sets in the at least one first resource set, the report information includes part or all of output information of the one AI model, the one AI model is selected by the terminal device or determined based on model indication information, or the one AI model is the only AI model included in the at least one AI model; or,

determining the report information based on the at least one first resource set and multiple AI models in the at least one AI model, where an input of each AI model among the multiple AI models includes part or all of first resource sets in the at least one first resource set, and the report information includes part or all of output information of the each AI model; or, an input of a first AI model among the multiple AI models includes part or all of first resource sets in the at least one first resource set, an input of an *(m + n)-th* AI model includes part or all of output information of an *m-th* to an *(m + n - 1)-th* AI models, and the report information includes part or all of output information of a last AI model among the multiple AI models, *m = 1, 2,...M-1, n* is a predefined or configured positive integer, *m + n* is an integer from 2 to *M,* and *M* is a quantity of the multiple AI models.

In an embodiment, the model indication information and/or the input information and the output information of each AI model is determined based on at least one of the following:

pre-definition in a protocol;

a radio resource control (RRC) message configuration;

a media access control - control element (MAC CE) indication; or

a downlink control information (DCI) indication.

In an embodiment, the output information of the AI model in the report information includes at least one of the following:

first channel state information of the first resource set;

second channel state information of a second resource set, where the second resource set corresponds to the output information of the AI model in the report information;

identifiers of part of output layer nodes of the AI model and/or output values of the part of output layer nodes, where the identifiers and/or output values of the part of output layer nodes satisfy a given condition; or

output values of all of output layer nodes of the AI model.

In an embodiment, the second resource set is different from the first resource set in at least one of the following:

a type of resource set is different;

a type of reference signal is different;

a reference signal is different;

a time domain resource for transmission is different;

a frequency domain resource for transmission is different;

a transmission port is different;

a transmission beam is different;

a reception beam is different;

the first resource set and the second resource set are independently configured; or,

the first resource set is a subset of the second resource set.

In an embodiment, the second channel state information of the second resource set includes at least one of the following:

identifiers of *K* resources satisfying the given condition in the second resource set;

confidence or probability corresponding to *K* resources;

inference reference signal received power (RSRP) corresponding to *K* resources;

inference reference signal received quality (RSRQ) corresponding to *K* resources; or,

inference signal to interference and noise ratio (SINR) corresponding to *K* resources;

where *K* is a predefined or configured positive integer, and a value of *K* does not exceed a quantity of the second resource sets.

In an embodiment, the first channel state information of the first resource set includes at least one of the following:

a channel estimation result obtained based on the at least one first resource set;

channel estimation result compression information obtained based on the at least one first resource set;

a channel estimation result and channel estimation result compression information obtained based on the at least one first resource set; or,

information for channel estimation or channel recovery corresponding to a resource in the first resource set.

In an embodiment, the output information of the AI model included in the report information is quantized and/or encoded information.

The methods and apparatuses provided by the embodiments of the present application are based on the same conception, and the implementation of the apparatuses and methods may be referred to each other since the principles of solving problems by the methods and apparatuses are similar, and are not repeated here.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

It should be noted here that the above apparatus according to the embodiments of the present application may implement all the method steps implemented by the above method embodiments, and may achieve the same effect. The same parts and beneficial effects as the same method embodiments are not repeated here.

An embodiment of the present application further provides a processor-readable storage medium storing a computer program that cause a processor to perform the steps of the methods for measurement report described above, for example, including:

determining at least one first resource set and at least one artificial intelligence (AI) model having an association relationship with the at least one first resource set, where the first resource set is a measurement resource set; and determining report information based on the at least one first resource set and the at least one AI model, and transmitting the report information to a network device, where the report information includes part or all of output information of the at least one AI model; or

receiving report information transmitted from a terminal device, where the report information is determined based on at least one first resource set and at least one artificial intelligence (AI) model, the at least one first resource set and the at least one AI model have an association relationship, the report information includes part or all of output information of the at least one AI model, and the first resource set is a measurement resource set.

The processor-readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

**Claims**

1. A method for measurement report, comprising:

   determining at least one first resource set and at least one artificial intelligence (AI) model having an association relationship with the at least one first resource set, wherein the first resource set is a measurement resource set; and
   determining report information based on the at least one first resource set and the at least one AI model, and transmitting the report information to a network device, wherein the report information comprises part or all of output information of the at least one AI model.

2. The method of claim 1, wherein the association relationship is determined based on at least one of the following:

   an index of the at least one first resource set and an index of the at least one AI model are comprised in same report configuration information;
   an index of the at least one first resource set and an index of the at least one AI model satisfy a given relationship; or,
   an index of the at least one first resource set and an index of the at least one AI model are indicated by same association indication information.

3. The method of claim 2, wherein a quantity of the at least one first resource set is *N,* a quantity of the at least one AI model is *M, N* and *M* are both positive integers, and the association relationship comprises:

if *N* is greater than *M,* an *i-th* AI model is associated with first resource sets numbered

$$\left\lfloor \frac{N}{M} \right\rfloor \cdot i, \left\lfloor \frac{N}{M} \right\rfloor \cdot i + 1, ..., \left\lfloor \frac{N}{M} \right\rfloor \cdot (i+1) - 1$$, or associated with first resource sets numbered

$$\left\lceil \frac{N}{M} \right\rceil \cdot i, \left\lceil \frac{N}{M} \right\rceil \cdot i + 1, ..., \left\lceil \frac{N}{M} \right\rceil \cdot (i+1) - 1$$;

if *N* is equal to *M,* an *i-th* AI model is associated with an *i-th* first resource set;

if *N* is less than *M,* an *i-th* first resource set is associated with AI models numbered

$$\left\lfloor \frac{M}{N} \right\rfloor \cdot i, \left\lfloor \frac{M}{N} \right\rfloor \cdot i + 1, ..., \left\lfloor \frac{M}{N} \right\rfloor \cdot (i+1) - 1$$, or associated with AI models numbered

$$\left\lceil \frac{M}{N} \right\rceil \cdot i, \left\lceil \frac{M}{N} \right\rceil \cdot i + 1, ..., \left\lceil \frac{M}{N} \right\rceil \cdot (i+1) - 1$$;

or,

if *N* is greater than *M,* an AI model with index *j* is associated with first resource sets with indexes of

$$\left\lfloor \frac{N}{M} \right\rfloor \cdot j, \left\lfloor \frac{N}{M} \right\rfloor \cdot j + 1, ..., \left\lfloor \frac{N}{M} \right\rfloor \cdot (j+1) - 1$$, or associated with first resource sets with indexes of

$$\left\lceil \frac{N}{M} \right\rceil \cdot j, \left\lceil \frac{N}{M} \right\rceil \cdot j + 1, ..., \left\lceil \frac{N}{M} \right\rceil \cdot (j+1) - 1$$;

if *N* is equal to *M,* an AI model with index *j* is associated with a first resource set with index *j;*

if *N* is less than *M,* a first resource set with index *j* is associated with AI models with indexes of

$$\left\lfloor \frac{M}{N} \right\rfloor \cdot j, \left\lfloor \frac{M}{N} \right\rfloor \cdot j + 1, ..., \left\lfloor \frac{M}{N} \right\rfloor \cdot (j+1) - 1$$, or associated with AI models with indexes of

$$\left\lceil \frac{M}{N} \right\rceil \cdot j, \left\lceil \frac{M}{N} \right\rceil \cdot j + 1, ..., \left\lceil \frac{M}{N} \right\rceil \cdot (j+1) - 1$$;

wherein ⌈ ⌉ indicates rounding up, ⌊ ⌋ indicates rounding down, *i* is an integer from 1 to *M,* and *j* is an integer from 0 to *M-1.*

4. The method of claim 2, wherein the association indication information is used to indicate indexes of one or more AI models associated with each first resource set, and/or the association indication information is used to indicate one or more first resource sets associated with each AI model.

5. The method of claim 1, wherein determining the report information based on the at least one first resource set and the at least one AI model comprises:
determining the report information based on the at least one first resource set and one or more AI models in the at least one AI model.

6. The method of claim 5, wherein determining the report information comprises:

determining the report information based on the at least one first resource set and one AI model in the at least one AI model, wherein an input of the one AI model comprises part or all of first resource sets in the at least one first resource set, the report information comprises part or all of output information of the one AI model, the one AI model is selected by a terminal device or determined based on model indication information, or the one AI model is the only AI model comprised in the at least one AI model; or,
determining the report information based on the at least one first resource set and multiple AI models in the at least one AI model, wherein an input of each AI model among the multiple AI models comprises part or all of first resource sets in the at least one first resource set, and the report information comprises part or all of output information of the each AI model; or, an input of a first AI model among the multiple AI models comprises part or all of first resource sets in the at least one first resource set, an input of an *(m + n)-th* AI model comprises part or all of output information of an *m-th* to an *(m + n - 1)-th* AI models, and the report information comprises part or all of output information of a last AI model among the multiple AI models, *m = 1, 2,...M-1, n* is a predefined or configured positive integer, *m + n* is an integer from 2 to *M,* and *M* is a quantity of the multiple AI models.

7. The method of claim 6, wherein the model indication information and/or the input information and the output information of each AI model is determined based on at least one of the following:

pre-definition in a protocol;
a radio resource control (RRC) message configuration;
a media access control - control element (MAC CE) indication; or
a downlink control information (DCI) indication.

8. The method of any of claims 1 to 7, wherein the output information of the AI model in the report information comprises at least one of the following:

first channel state information of the first resource set;
second channel state information of a second resource set, wherein the second resource set corresponds to the output information of the AI model in the report information;
identifiers of part of output layer nodes of the AI model and/or output values of the part of output layer nodes, wherein the identifiers and/or output values of the part of output layer nodes satisfy a given condition; or
output values of all of output layer nodes of the AI model.

9. The method of claim 8, wherein the second resource set is different from the first resource set in at least one of the following:

a type of resource set is different;
a type of reference signal is different;
a reference signal is different;
a time domain resource for transmission is different;
a frequency domain resource for transmission is different;
a transmission port is different;
a transmission beam is different;
a reception beam is different;
the first resource set and the second resource set are independently configured; or,
the first resource set is a subset of the second resource set.

10. The method of claim 8, wherein the second channel state information of the second resource set comprises at least one of the following:

identifiers of $K$ resources satisfying the given condition in the second resource set;
confidence or probability corresponding to $K$ resources;
inference reference signal received power (RSRP) corresponding to $K$ resources;
inference reference signal received quality (RSRQ) corresponding to $K$ resources; or,
inference signal to interference and noise ratio (SINR) corresponding to $K$ resources;
wherein $K$ is a predefined or configured positive integer, and a value of $K$ does not exceed a quantity of the second resource sets.

11. The method of claim 8, wherein the first channel state information of the first resource set comprises at least one of the following:

a channel estimation result obtained based on the at least one first resource set;
channel estimation result compression information obtained based on the at least one first resource set;
a channel estimation result and channel estimation result compression information obtained based on the at least one first resource set; or,
information for channel estimation or channel recovery corresponding to a resource in the first resource set.

12. The method of claim 1, wherein the output information of the AI model comprised in the report information is quantized and/or encoded information.

13. A method for measurement report, comprising:
receiving report information transmitted from a terminal device, wherein the report information is determined based on at least one first resource set and at least one artificial intelligence (AI) model, the at least one first resource set and the at least one AI model have an association relationship, the report information comprises part or all of output information of the at least one AI model, and the first resource set is a measurement resource set.

14. The method of claim 13, wherein the association relationship is determined based on at least one of the following:

an index of the at least one first resource set and an index of the at least one AI model are comprised in same report configuration information;
an index of the at least one first resource set and an index of the at least one AI model satisfy a given relationship; or,
an index of the at least one first resource set and an index of the at least one AI model are indicated by same association indication information.

15. The method of claim 14, wherein a quantity of the at least one first resource set is $N$, a quantity of the at least one AI model is $M$, $N$ and $M$ are both positive integers, and the association relationship comprises:

if $N$ is greater than $M$, an $i$-th AI model is associated with first resource sets numbered
$$\left\lfloor \frac{N}{M} \right\rfloor \cdot i, \left\lfloor \frac{N}{M} \right\rfloor \cdot i + 1, ..., \left\lfloor \frac{N}{M} \right\rfloor \cdot (i+1) - 1$$, or associated with first resource sets numbered
$$\left\lceil \frac{N}{M} \right\rceil \cdot i, \left\lceil \frac{N}{M} \right\rceil \cdot i + 1, ..., \left\lceil \frac{N}{M} \right\rceil \cdot (i+1) - 1$$;
if $N$ is equal to $M$, an $i$-th AI model is associated with an $i$-th first resource set;
if $N$ is less than $M$, an $i$-th first resource set is associated with AI models numbered
$$\left\lfloor \frac{M}{N} \right\rfloor \cdot i, \left\lfloor \frac{M}{N} \right\rfloor \cdot i + 1, ..., \left\lfloor \frac{M}{N} \right\rfloor \cdot (i+1) - 1$$, or associated with AI models numbered
$$\left\lceil \frac{M}{N} \right\rceil \cdot i, \left\lceil \frac{M}{N} \right\rceil \cdot i + 1, ..., \left\lceil \frac{M}{N} \right\rceil \cdot (i+1) - 1$$;
or,
if $N$ is greater than $M$, an AI model with index $j$ is associated with first resource sets with indexes of
$$\left\lfloor \frac{N}{M} \right\rfloor \cdot j, \left\lfloor \frac{N}{M} \right\rfloor \cdot j + 1, ..., \left\lfloor \frac{N}{M} \right\rfloor \cdot (j+1) - 1$$, or associated with first resource sets with indexes of
$$\left\lceil \frac{N}{M} \right\rceil \cdot j, \left\lceil \frac{N}{M} \right\rceil \cdot j + 1, ..., \left\lceil \frac{N}{M} \right\rceil \cdot (j+1) - 1$$;
if $N$ is equal to $M$, an AI model with index $j$ is associated with a first resource set with index $j$;
if $N$ is less than $M$, a first resource set with index $j$ is associated with AI models with indexes of
$$\left\lfloor \frac{M}{N} \right\rfloor \cdot j, \left\lfloor \frac{M}{N} \right\rfloor \cdot j + 1, ..., \left\lfloor \frac{M}{N} \right\rfloor \cdot (j+1) - 1$$, or associated with AI models with indexes of
$$\left\lceil \frac{M}{N} \right\rceil \cdot j, \left\lceil \frac{M}{N} \right\rceil \cdot j + 1, ..., \left\lceil \frac{M}{N} \right\rceil \cdot (j+1) - 1$$;
wherein ⌈ ⌉ indicates rounding up, ⌊ ⌋ indicates rounding down, $i$ is an integer from 1 to $M$, and $j$ is an integer from 0 to $M$-1.

16. The method of claim 13, wherein the association indication information is used to indicate indexes of one or more AI models associated with each first resource set, and/or the association indication information is used to indicate one or more first resource sets associated with each AI model.

17. The method of claim 13, wherein determining the report information based on the at least one first resource set and the at least one AI model comprises:
determining the report information based on the at least one first resource set and one or more AI models in the at least one AI model.

18. The method of claim 13, wherein determining the report information comprises:

determining the report information based on the at least one first resource set and one AI model in the at least one AI model, wherein an input of the one AI model comprises part or all of first resource sets in the at least one first resource set, the report information comprises part or all of output information of the one AI model, the one AI model is selected by the terminal device or determined based on model indication information, or the one AI model is the only AI model comprised in the at least one AI model; or,

determining the report information based on the at least one first resource set and multiple AI models in the at least one AI model, wherein an input of each AI model among the multiple AI models comprises part or all of first resource sets in the at least one first resource set, and the report information comprises part or all of output information of the each AI model; or, an input of a first AI model among the multiple AI models comprises part or all of first resource sets in the at least one first resource set, an input of an *(m + n)-th* AI model comprises part or all of output information of an *m-th* to an *(m + n - 1)-th* AI models, and the report information comprises part or all of output information of a last AI model among the multiple AI models, *m = 1, 2,...M-1, n* is a predefined or configured positive integer, *m + n* is an integer from 2 to *M,* and *M* is a quantity of the multiple AI models.

19. The method of claim 18, wherein the model indication information and/or the input information and the output information of each AI model is determined based on at least one of the following:

pre-definition in a protocol;
a radio resource control (RRC) message configuration;
a media access control - control element (MAC CE) indication; or
a downlink control information (DCI) indication.

20. The method of any of claims 13 to 19, wherein the output information of the AI model in the report information comprises at least one of the following:

first channel state information of the first resource set;
second channel state information of a second resource set, wherein the second resource set corresponds to the output information of the AI model in the report information;
identifiers of part of output layer nodes of the AI model and/or output values of the part of output layer nodes, wherein the identifiers and/or output values of the part of output layer nodes satisfy a given condition; or
output values of all of output layer nodes of the AI model.

21. The method of claim 20, wherein the second resource set is different from the first resource set in at least one of the following:

a type of resource set is different;
a type of reference signal is different;
a reference signal is different;
a time domain resource for transmission is different;
a frequency domain resource for transmission is different;
a transmission port is different;
a transmission beam is different;
a reception beam is different;
the first resource set and the second resource set are independently configured; or,
the first resource set is a subset of the second resource set.

22. The method of claim 20, wherein the second channel state information of the second resource set comprises at least one of the following:

identifiers of *K* resources satisfying the given condition in the second resource set;
confidence or probability corresponding to *K* resources;
inference reference signal received power (RSRP) corresponding to *K* resources;
inference reference signal received quality (RSRQ) corresponding to *K* resources; or,
inference signal to interference and noise ratio (SINR) corresponding to *K* resources;
wherein *K* is a predefined or configured positive integer, and a value of *K* does not exceed a quantity of the second resource sets.

23. The method of claim 20, wherein the first channel state information of the first resource set comprises at least one of the following:

a channel estimation result obtained based on the at least one first resource set;
channel estimation result compression information obtained based on the at least one first resource set;

a channel estimation result and channel estimation result compression information obtained based on the at least one first resource set; or,

information for channel estimation or channel recovery corresponding to a resource in the first resource set.

24. The method of claim 13, wherein the output information of the AI model comprised in the report information is quantized and/or encoded information.

25. A terminal device, comprising a memory, a transceiver and a processor,

wherein the memory is used for storing a computer program, the transceiver is used for transmitting and receiving data under control of the processor, and the processor is used for reading the computer program in the memory and performing the following operations:

determining at least one first resource set and at least one artificial intelligence (AI) model having an association relationship with the at least one first resource set, wherein the first resource set is a measurement resource set; and

determining report information based on the at least one first resource set and the at least one AI model, and transmitting the report information to a network device, wherein the report information comprises part or all of output information of the at least one AI model.

26. The terminal device of claim 25, wherein the association relationship is determined based on at least one of the following:

an index of the at least one first resource set and an index of the at least one AI model are comprised in same report configuration information;

an index of the at least one first resource set and an index of the at least one AI model satisfy a given relationship; or,

an index of the at least one first resource set and an index of the at least one AI model are indicated by same association indication information.

27. The terminal device of claim 26, wherein a quantity of the at least one first resource set is $N$, a quantity of the at least one AI model is $M$, $N$ and $M$ are both positive integers, and the association relationship comprises:

if $N$ is greater than $M$, an $i$-th AI model is associated with first resource sets numbered $\left\lfloor \frac{N}{M} \right\rfloor \cdot i, \left\lfloor \frac{N}{M} \right\rfloor \cdot i + 1, ..., \left\lfloor \frac{N}{M} \right\rfloor \cdot (i+1) - 1$, or associated with first resource sets numbered $\left\lceil \frac{N}{M} \right\rceil \cdot i, \left\lceil \frac{N}{M} \right\rceil \cdot i + 1, ..., \left\lceil \frac{N}{M} \right\rceil \cdot (i+1) - 1$;

if $N$ is equal to $M$, an $i$-th AI model is associated with an $i$-th first resource set;

if $N$ is less than $M$, an $i$-th first resource set is associated with AI models numbered $\left\lfloor \frac{M}{N} \right\rfloor \cdot i, \left\lfloor \frac{M}{N} \right\rfloor \cdot i + 1, ..., \left\lfloor \frac{M}{N} \right\rfloor \cdot (i+1) - 1$, or associated with AI models numbered $\left\lceil \frac{M}{N} \right\rceil \cdot i, \left\lceil \frac{M}{N} \right\rceil \cdot i + 1, ..., \left\lceil \frac{M}{N} \right\rceil \cdot (i+1) - 1$;

or,

if $N$ is greater than $M$, an AI model with index $j$ is associated with first resource sets with indexes of $\left\lfloor \frac{N}{M} \right\rfloor \cdot j, \left\lfloor \frac{N}{M} \right\rfloor \cdot j + 1, ..., \left\lfloor \frac{N}{M} \right\rfloor \cdot (j+1) - 1$, or associated with first resource sets with indexes of $\left\lceil \frac{N}{M} \right\rceil \cdot j, \left\lceil \frac{N}{M} \right\rceil \cdot j + 1, ..., \left\lceil \frac{N}{M} \right\rceil \cdot (j+1) - 1$;

if $N$ is equal to $M$, an AI model with index j is associated with a first resource set with index $j$;

if $N$ is less than $M$, a first resource set with index $j$ is associated with AI models with indexes of $\left\lfloor \frac{M}{N} \right\rfloor \cdot j, \left\lfloor \frac{M}{N} \right\rfloor \cdot j + 1, ..., \left\lfloor \frac{M}{N} \right\rfloor \cdot (j+1) - 1$, or associated with AI models with indexes of $\left\lceil \frac{M}{N} \right\rceil \cdot j, \left\lceil \frac{M}{N} \right\rceil \cdot j + 1, ..., \left\lceil \frac{M}{N} \right\rceil \cdot (j+1) - 1$;

wherein ⌈ ⌉ indicates rounding up, ⌊ ⌋ indicates rounding down, $i$ is an integer from 1 to $M$, and $j$ is an integer from 0 to $M-1$.

28. The terminal device of claim 26, wherein the association indication information is used to indicate indexes of one or more AI models associated with each first resource set, and/or the association indication information is used to indicate one or more first resource sets associated with each AI model.

29. The terminal device of claim 25, wherein determining the report information based on the at least one first resource set and the at least one AI model comprises:

    determining the report information based on the at least one first resource set and one or more AI models in the at least one AI model.

30. The terminal device of claim 29, wherein determining the report information comprises:

    determining the report information based on the at least one first resource set and one AI model in the at least one AI model, wherein an input of the one AI model comprises part or all of first resource sets in the at least one first resource set, the report information comprises part or all of output information of the one AI model, the one AI model is selected by the terminal device or determined based on model indication information, or the one AI model is the only AI model comprised in the at least one AI model; or,

    determining the report information based on the at least one first resource set and multiple AI models in the at least one AI model, wherein an input of each AI model among the multiple AI models comprises part or all of first resource sets in the at least one first resource set, and the report information comprises part or all of output information of the each AI model; or, an input of a first AI model among the multiple AI models comprises part or all of first resource sets in the at least one first resource set, an input of an $(m+n)$-th AI model comprises part or all of output information of an $m$-th to an $(m+n-1)$-th AI models, and the report information comprises part or all of output information of a last AI model among the multiple AI models, $m = 1, 2,...M-1$, $n$ is a predefined or configured positive integer, $m+n$ is an integer from 2 to $M$, and $M$ is a quantity of the multiple AI models.

31. The terminal device of claim 30, wherein the model indication information and/or the input information and the output information of each AI model is determined based on at least one of the following:

    pre-definition in a protocol;
    a radio resource control (RRC) message configuration;
    a media access control - control element (MAC CE) indication; or
    a downlink control information (DCI) indication.

32. The terminal device of any of claims 25 to 31, wherein the output information of the AI model in the report information comprises at least one of the following:

    first channel state information of the first resource set;
    second channel state information of a second resource set, wherein the second resource set corresponds to the output information of the AI model in the report information;
    identifiers of part of output layer nodes of the AI model and/or output values of the part of output layer nodes, wherein the identifiers and/or output values of the part of output layer nodes satisfy a given condition; or
    output values of all of output layer nodes of the AI model.

33. The terminal device of claim 32, wherein the second resource set is different from the first resource set in at least one of the following:

    a type of resource set is different;
    a type of reference signal is different;
    a reference signal is different;
    a time domain resource for transmission is different;
    a frequency domain resource for transmission is different;
    a transmission port is different;
    a transmission beam is different;
    a reception beam is different;
    the first resource set and the second resource set are independently configured; or,

the first resource set is a subset of the second resource set.

34. The terminal device of claim 32, wherein the second channel state information of the second resource set comprises at least one of the following:

identifiers of $K$ resources satisfying the given condition in the second resource set;
confidence or probability corresponding to $K$ resources;
inference reference signal received power (RSRP) corresponding to $K$ resources;
inference reference signal received quality (RSRQ) corresponding to $K$ resources; or,
inference signal to interference and noise ratio (SINR) corresponding to $K$ resources;
wherein $K$ is a predefined or configured positive integer, and a value of $K$ does not exceed a quantity of the second resource sets.

35. The terminal device of claim 32, wherein the first channel state information of the first resource set comprises at least one of the following:

a channel estimation result obtained based on the at least one first resource set;
channel estimation result compression information obtained based on the at least one first resource set;
a channel estimation result and channel estimation result compression information obtained based on the at least one first resource set; or,
information for channel estimation or channel recovery corresponding to a resource in the first resource set.

36. The terminal device of claim 25, wherein the output information of the AI model comprised in the report information is quantized and/or encoded information.

37. A network device, comprising a memory, a transceiver and a processor,
wherein the memory is used for storing a computer program, the transceiver is used for transmitting and receiving data under control of the processor, and the processor is used for reading the computer program in the memory and performing the following operations:
receiving report information transmitted from a terminal device, wherein the report information is determined based on at least one first resource set and at least one artificial intelligence (AI) model, the at least one first resource set and the at least one AI model have an association relationship, the report information comprises part or all of output information of the at least one AI model, and the first resource set is a measurement resource set.

38. The network device of claim 37, wherein the association relationship is determined based on at least one of the following:

an index of the at least one first resource set and an index of the at least one AI model are comprised in same report configuration information;
an index of the at least one first resource set and an index of the at least one AI model satisfy a given relationship; or,
an index of the at least one first resource set and an index of the at least one AI model are indicated by same association indication information.

39. The network device of claim 38, wherein a quantity of the at least one first resource set is $N$, a quantity of the at least one AI model is $M$, $N$ and $M$ are both positive integers, and the association relationship comprises:

if $N$ is greater than $M$, an $i$-th AI model is associated with first resource sets numbered

$$\left\lfloor \frac{N}{M} \right\rfloor \cdot i, \left\lfloor \frac{N}{M} \right\rfloor \cdot i + 1, ..., \left\lfloor \frac{N}{M} \right\rfloor \cdot (i+1) - 1$$, or associated with first resource sets numbered

$$\left\lceil \frac{N}{M} \right\rceil \cdot i, \left\lceil \frac{N}{M} \right\rceil \cdot i + 1, ..., \left\lceil \frac{N}{M} \right\rceil \cdot (i+1) - 1$$;

if $N$ is equal to $M$, an $i$-th AI model is associated with an $i$-th first resource set;
if $N$ is less than $M$, an $i$-th first resource set is associated with AI models numbered

$$\left\lfloor \frac{M}{N} \right\rfloor \cdot i, \left\lfloor \frac{M}{N} \right\rfloor \cdot i + 1, ..., \left\lfloor \frac{M}{N} \right\rfloor \cdot (i+1) - 1$$, or associated with AI models numbered

$$\left\lceil \frac{M}{N} \right\rceil \cdot i, \left\lceil \frac{M}{N} \right\rceil \cdot i + 1, ..., \left\lceil \frac{M}{N} \right\rceil \cdot (i+1) - 1 \;;$$

or,

if $N$ is greater than $M,$ an AI model with index $j$ is associated with first resource sets with indexes of

$$\left\lfloor \frac{N}{M} \right\rfloor \cdot j, \left\lfloor \frac{N}{M} \right\rfloor \cdot j + 1, ..., \left\lfloor \frac{N}{M} \right\rfloor \cdot (j+1) - 1 \;,\;\text{or associated with first resource sets with indexes of}$$

$$\left\lceil \frac{N}{M} \right\rceil \cdot j, \left\lceil \frac{N}{M} \right\rceil \cdot j + 1, ..., \left\lceil \frac{N}{M} \right\rceil \cdot (j+1) - 1 \;;$$

if $N$ is equal to $M,$ an AI model with index $j$ is associated with a first resource set with index $j;$

if $N$ is less than $M,$ a first resource set with index $j$ is associated with AI models with indexes of

$$\left\lfloor \frac{M}{N} \right\rfloor \cdot j, \left\lfloor \frac{M}{N} \right\rfloor \cdot j + 1, ..., \left\lfloor \frac{M}{N} \right\rfloor \cdot (j+1) - 1 \;,\;\text{or associated with AI models with indexes of}$$

$$\left\lceil \frac{M}{N} \right\rceil \cdot j, \left\lceil \frac{M}{N} \right\rceil \cdot j + 1, ..., \left\lceil \frac{M}{N} \right\rceil \cdot (j+1) - 1 \;;$$

wherein ⌈ ⌉ indicates rounding up, ⌊ ⌋ indicates rounding down, $i$ is an integer from 1 to $M,$ and $j$ is an integer from 0 to $M$-1.

40. The network device of claim 37, wherein the association indication information is used to indicate indexes of one or more AI models associated with each first resource set, and/or the association indication information is used to indicate one or more first resource sets associated with each AI model.

41. The network device of claim 37, wherein determining the report information based on the at least one first resource set and the at least one AI model comprises:
determining the report information based on the at least one first resource set and one or more AI models in the at least one AI model.

42. The network device of claim 37, wherein determining the report information comprises:

determining the report information based on the at least one first resource set and one AI model in the at least one AI model, wherein an input of the one AI model comprises part or all of first resource sets in the at least one first resource set, the report information comprises part or all of output information of the one AI model, the one AI model is selected by the terminal device or determined based on model indication information, or the one AI model is the only AI model comprised in the at least one AI model; or,
determining the report information based on the at least one first resource set and multiple AI models in the at least one AI model, wherein an input of each AI model among the multiple AI models comprises part or all of first resource sets in the at least one first resource set, and the report information comprises part or all of output information of the each AI model; or, an input of a first AI model among the multiple AI models comprises part or all of first resource sets in the at least one first resource set, an input of an *(m + n)-th* AI model comprises part or all of output information of an *m-th* to an *(m + n - 1)-th* AI models, and the report information comprises part or all of output information of a last AI model among the multiple AI models, *m = 1, 2,...M-1, n* is a predefined or configured positive integer, *m + n* is an integer from 2 to *M,* and *M* is a quantity of the multiple AI models.

43. The network device of claim 42, wherein the model indication information and/or the input information and the output information of each AI model is determined based on at least one of the following:

pre-definition in a protocol;
a radio resource control (RRC) message configuration;
a media access control - control element (MAC CE) indication; or
a downlink control information (DCI) indication.

44. The network device of any of claims 37 to 43, wherein the output information of the AI model in the report information comprises at least one of the following:

first channel state information of the first resource set;
second channel state information of a second resource set, wherein the second resource set corresponds to the output information of the AI model in the report information;

identifiers of part of output layer nodes of the AI model and/or output values of the part of output layer nodes, wherein the identifiers and/or output values of the part of output layer nodes satisfy a given condition; or output values of all of output layer nodes of the AI model.

45. The network device of claim 44, wherein the second resource set is different from the first resource set in at least one of the following:

a type of resource set is different;
a type of reference signal is different;
a reference signal is different;
a time domain resource for transmission is different;
a frequency domain resource for transmission is different;
a transmission port is different;
a transmission beam is different;
a reception beam is different;
the first resource set and the second resource set are independently configured; or,
the first resource set is a subset of the second resource set.

46. The network device of claim 44, wherein the second channel state information of the second resource set comprises at least one of the following:

identifiers of K resources satisfying the given condition in the second resource set;
confidence or probability corresponding to $K$ resources;
inference reference signal received power (RSRP) corresponding to $K$ resources;
inference reference signal received quality (RSRQ) corresponding to $K$ resources; or,
inference signal to interference and noise ratio (SINR) corresponding to $K$ resources;
wherein $K$ is a predefined or configured positive integer, and a value of $K$ does not exceed a quantity of the second resource sets.

47. The network device of claim 44, wherein the first channel state information of the first resource set comprises at least one of the following:

a channel estimation result obtained based on the at least one first resource set;
channel estimation result compression information obtained based on the at least one first resource set;
a channel estimation result and channel estimation result compression information obtained based on the at least one first resource set; or,
information for channel estimation or channel recovery corresponding to a resource in the first resource set.

48. The network device of claim 37, wherein the output information of the AI model comprised in the report information is quantized and/or encoded information.

49. An apparatus for measurement report, comprising:

a first determining unit, used for determining at least one first resource set and at least one artificial intelligence (AI) model having an association relationship with the at least one first resource set, wherein the first resource set is a measurement resource set; and
a second determining unit, used for determining report information based on the at least one first resource set and the at least one AI model, and transmitting the report information to a network device, wherein the report information comprises part or all of output information of the at least one AI model.

50. The apparatus of claim 49, wherein the association relationship is determined based on at least one of the following:

an index of the at least one first resource set and an index of the at least one AI model are comprised in same report configuration information;
an index of the at least one first resource set and an index of the at least one AI model satisfy a given relationship; or,
an index of the at least one first resource set and an index of the at least one AI model are indicated by same association indication information.

**51.** The apparatus of claim 50, wherein a quantity of the at least one first resource set is $N$, a quantity of the at least one AI model is $M$, $N$ and $M$ are both positive integers, and the association relationship comprises:

if $N$ is greater than $M$, an $i$-th AI model is associated with first resource sets numbered

$$\left\lfloor \frac{N}{M} \right\rfloor \cdot i, \left\lfloor \frac{N}{M} \right\rfloor \cdot i + 1, ..., \left\lfloor \frac{N}{M} \right\rfloor \cdot (i+1) - 1$$, or associated with first resource sets numbered

$$\left\lceil \frac{N}{M} \right\rceil \cdot i, \left\lceil \frac{N}{M} \right\rceil \cdot i + 1, ..., \left\lceil \frac{N}{M} \right\rceil \cdot (i+1) - 1$$;

if $N$ is equal to $M$, an $i$-th AI model is associated with an $i$-th first resource set;

if $N$ is less than $M$, an $i$-th first resource set is associated with AI models numbered

$$\left\lfloor \frac{M}{N} \right\rfloor \cdot i, \left\lfloor \frac{M}{N} \right\rfloor \cdot i + 1, ..., \left\lfloor \frac{M}{N} \right\rfloor \cdot (i+1) - 1$$, or associated with AI models numbered

$$\left\lceil \frac{M}{N} \right\rceil \cdot i, \left\lceil \frac{M}{N} \right\rceil \cdot i + 1, ..., \left\lceil \frac{M}{N} \right\rceil \cdot (i+1) - 1$$;

or,

if $N$ is greater than $M$, an AI model with index $j$ is associated with first resource sets with indexes of

$$\left\lfloor \frac{N}{M} \right\rfloor \cdot j, \left\lfloor \frac{N}{M} \right\rfloor \cdot j + 1, ..., \left\lfloor \frac{N}{M} \right\rfloor \cdot (j+1) - 1$$, or associated with first resource sets with indexes of

$$\left\lceil \frac{N}{M} \right\rceil \cdot j, \left\lceil \frac{N}{M} \right\rceil \cdot j + 1, ..., \left\lceil \frac{N}{M} \right\rceil \cdot (j+1) - 1$$;

if $N$ is equal to $M$, an AI model with index $j$ is associated with a first resource set with index $j$;

if $N$ is less than $M$, a first resource set with index $j$ is associated with AI models with indexes of

$$\left\lfloor \frac{M}{N} \right\rfloor \cdot j, \left\lfloor \frac{M}{N} \right\rfloor \cdot j + 1, ..., \left\lfloor \frac{M}{N} \right\rfloor \cdot (j+1) - 1$$, or associated with AI models with indexes of

$$\left\lceil \frac{M}{N} \right\rceil \cdot j, \left\lceil \frac{M}{N} \right\rceil \cdot j + 1, ..., \left\lceil \frac{M}{N} \right\rceil \cdot (j+1) - 1$$;

wherein ⌈ ⌉ indicates rounding up, ⌊ ⌋ indicates rounding down, $i$ is an integer from 1 to $M$, and $j$ is an integer from 0 to $M$-1.

**52.** The apparatus of claim 50, wherein the association indication information is used to indicate indexes of one or more AI models associated with each first resource set, and/or the association indication information is used to indicate one or more first resource sets associated with each AI model.

**53.** The apparatus of claim 49, wherein the second determining unit is further used for:
determining the report information based on the at least one first resource set and one or more AI models in the at least one AI model.

**54.** The apparatus of claim 53, wherein the second determining unit is further used for:

determining the report information based on the at least one first resource set and one AI model in the at least one AI model, wherein an input of the one AI model comprises part or all of first resource sets in the at least one first resource set, the report information comprises part or all of output information of the one AI model, the one AI model is selected by a terminal device or determined based on model indication information, or the one AI model is the only AI model comprised in the at least one AI model; or,
determining the report information based on the at least one first resource set and multiple AI models in the at least one AI model, wherein an input of each AI model among the multiple AI models comprises part or all of first resource sets in the at least one first resource set, and the report information comprises part or all of output information of the each AI model; or, an input of a first AI model among the multiple AI models comprises part or all of first resource sets in the at least one first resource set, an input of an $(m + n)$-th AI model comprises part or all of output information of an $m$-th to an $(m + n - 1)$-th AI models, and the report information comprises part or all of output information of a last AI model among the multiple AI models, $m = 1, 2,...M$-1, $n$ is a predefined or configured positive integer, $m + n$ is an integer from 2 to $M$, and $M$ is a quantity of the multiple AI models.

**55.** The apparatus of claim 54, wherein the model indication information and/or the input information and the output information of each AI model is determined based on at least one of the following:

> pre-definition in a protocol;
> a radio resource control (RRC) message configuration;
> a media access control - control element (MAC CE) indication; or
> a downlink control information (DCI) indication.

56. The apparatus of any of claims 49 to 55, wherein the output information of the AI model in the report information comprises at least one of the following:

> first channel state information of the first resource set;
> second channel state information of a second resource set, wherein the second resource set corresponds to the output information of the AI model in the report information;
> identifiers of part of output layer nodes of the AI model and/or output values of the part of output layer nodes, wherein the identifiers and/or output values of the part of output layer nodes satisfy a given condition; or
> output values of all of output layer nodes of the AI model.

57. The apparatus of claim 56, wherein the second resource set is different from the first resource set in at least one of the following:

> a type of resource set is different;
> a type of reference signal is different;
> a reference signal is different;
> a time domain resource for transmission is different;
> a frequency domain resource for transmission is different;
> a transmission port is different;
> a transmission beam is different;
> a reception beam is different;
> the first resource set and the second resource set are independently configured; or,
> the first resource set is a subset of the second resource set.

58. The apparatus of claim 56, wherein the second channel state information of the second resource set comprises at least one of the following:

> identifiers of $K$ resources satisfying the given condition in the second resource set;
> confidence or probability corresponding to $K$ resources;
> inference reference signal received power (RSRP) corresponding to $K$ resources;
> inference reference signal received quality (RSRQ) corresponding to $K$ resources; or,
> inference signal to interference and noise ratio (SINR) corresponding to $K$ resources;
> wherein $K$ is a predefined or configured positive integer, and a value of $K$ does not exceed a quantity of the second resource sets.

59. The apparatus of claim 56, wherein the first channel state information of the first resource set comprises at least one of the following:

> a channel estimation result obtained based on the at least one first resource set;
> channel estimation result compression information obtained based on the at least one first resource set;
> a channel estimation result and channel estimation result compression information obtained based on the at least one first resource set; or,
> information for channel estimation or channel recovery corresponding to a resource in the first resource set.

60. The apparatus of claim 49, wherein the output information of the AI model comprised in the report information is quantized and/or encoded information.

61. An apparatus for measurement report, comprising:
a receiving unit, used for receiving report information transmitted from a terminal device, wherein the report information is determined based on at least one first resource set and at least one artificial intelligence (AI) model, the at least one first resource set and the at least one AI model have an association relationship, the report information comprises part or all of output information of the at least one AI model, and the first resource set is a measurement resource set.

62. The apparatus of claim 61, wherein the association relationship is determined based on at least one of the following:

   an index of the at least one first resource set and an index of the at least one AI model are comprised in same report configuration information;
   an index of the at least one first resource set and an index of the at least one AI model satisfy a given relationship; or,
   an index of the at least one first resource set and an index of the at least one AI model are indicated by same association indication information.

63. The apparatus of claim 62, wherein a quantity of the at least one first resource set is $N$, a quantity of the at least one AI model is $M$, $N$ and $M$ are both positive integers, and the association relationship comprises:

   if $N$ is greater than $M$, an $i$-th AI model is associated with first resource sets numbered
   $$\left\lfloor \frac{N}{M} \right\rfloor \cdot i, \left\lfloor \frac{N}{M} \right\rfloor \cdot i + 1, ..., \left\lfloor \frac{N}{M} \right\rfloor \cdot (i+1) - 1$$, or associated with first resource sets numbered
   $$\left\lceil \frac{N}{M} \right\rceil \cdot i, \left\lceil \frac{N}{M} \right\rceil \cdot i + 1, ..., \left\lceil \frac{N}{M} \right\rceil \cdot (i+1) - 1$$;
   if $N$ is equal to $M$, an $i$-th AI model is associated with an $i$-th first resource set;
   if $N$ is less than $M$, an $i$-th first resource set is associated with AI models numbered
   $$\left\lfloor \frac{M}{N} \right\rfloor \cdot i, \left\lfloor \frac{M}{N} \right\rfloor \cdot i + 1, ..., \left\lfloor \frac{M}{N} \right\rfloor \cdot (i+1) - 1$$, or associated with AI models numbered
   $$\left\lceil \frac{M}{N} \right\rceil \cdot i, \left\lceil \frac{M}{N} \right\rceil \cdot i + 1, ..., \left\lceil \frac{M}{N} \right\rceil \cdot (i+1) - 1$$;
   or,
   if $N$ is greater than $M$, an AI model with index $j$ is associated with first resource sets with indexes of
   $$\left\lfloor \frac{N}{M} \right\rfloor \cdot j, \left\lfloor \frac{N}{M} \right\rfloor \cdot j + 1, ..., \left\lfloor \frac{N}{M} \right\rfloor \cdot (j+1) - 1$$, or associated with first resource sets with indexes of
   $$\left\lceil \frac{N}{M} \right\rceil \cdot j, \left\lceil \frac{N}{M} \right\rceil \cdot j + 1, ..., \left\lceil \frac{N}{M} \right\rceil \cdot (j+1) - 1$$;
   if $N$ is equal to $M$, an AI model with index $j$ is associated with a first resource set with index $j$;
   if $N$ is less than $M$, a first resource set with index $j$ is associated with AI models with indexes of
   $$\left\lfloor \frac{M}{N} \right\rfloor \cdot j, \left\lfloor \frac{M}{N} \right\rfloor \cdot j + 1, ..., \left\lfloor \frac{M}{N} \right\rfloor \cdot (j+1) - 1$$, or associated with AI models with indexes of
   $$\left\lceil \frac{M}{N} \right\rceil \cdot j, \left\lceil \frac{M}{N} \right\rceil \cdot j + 1, ..., \left\lceil \frac{M}{N} \right\rceil \cdot (j+1) - 1$$;
   wherein ⌈ ⌉ indicates rounding up, ⌊ ⌋ indicates rounding down, $i$ is an integer from 1 to $M$, and $j$ is an integer from 0 to $M-1$.

64. The apparatus of claim 61, wherein the association indication information is used to indicate indexes of one or more AI models associated with each first resource set, and/or the association indication information is used to indicate one or more first resource sets associated with each AI model.

65. The apparatus of claim 61, wherein determining the report information based on the at least one first resource set and the at least one AI model comprises:
   determining the report information based on the at least one first resource set and one or more AI models in the at least one AI model.

66. The apparatus of claim 13, wherein determining the report information comprises:

   determining the report information based on the at least one first resource set and one AI model in the at least one AI model, wherein an input of the one AI model comprises part or all of first resource sets in the at least one first resource set, the report information comprises part or all of output information of the one AI model, the one AI model is selected by the terminal device or determined based on model indication information, or the one AI model is the only AI model comprised in the at least one AI model; or,

determining the report information based on the at least one first resource set and multiple AI models in the at least one AI model, wherein an input of each AI model among the multiple AI models comprises part or all of first resource sets in the at least one first resource set, and the report information comprises part or all of output information of the each AI model; or, an input of a first AI model among the multiple AI models comprises part or all of first resource sets in the at least one first resource set, an input of an *(m + n)-th* AI model comprises part or all of output information of an *m-th* to an *(m + n - 1)-th* AI models, and the report information comprises part or all of output information of a last AI model among the multiple AI models, *m = 1, 2 .... M-1, n is* a predefined or configured positive integer, *m + n* is an integer from 2 to *M*, and *M* is a quantity of the multiple AI models.

67. The apparatus of claim 66, wherein the model indication information and/or the input information and the output information of each AI model is determined based on at least one of the following:

   pre-definition in a protocol;
   a radio resource control (RRC) message configuration;
   a media access control - control element (MAC CE) indication; or
   a downlink control information (DCI) indication.

68. The apparatus of any of claims 61 to 67, wherein the output information of the AI model in the report information comprises at least one of the following:

   first channel state information of the first resource set;
   second channel state information of a second resource set, wherein the second resource set corresponds to the output information of the AI model in the report information;
   identifiers of part of output layer nodes of the AI model and/or output values of the part of output layer nodes, wherein the identifiers and/or output values of the part of output layer nodes satisfy a given condition; or
   output values of all of output layer nodes of the AI model.

69. The apparatus of claim 68, wherein the second resource set is different from the first resource set in at least one of the following:

   a type of resource set is different;
   a type of reference signal is different;
   a reference signal is different;
   a time domain resource for transmission is different;
   a frequency domain resource for transmission is different;
   a transmission port is different;
   a transmission beam is different;
   a reception beam is different;
   the first resource set and the second resource set are independently configured; or,
   the first resource set is a subset of the second resource set.

70. The apparatus of claim 68, wherein the second channel state information of the second resource set comprises at least one of the following:

   identifiers of K resources satisfying the given condition in the second resource set;
   confidence or probability corresponding to K resources;
   inference reference signal received power (RSRP) corresponding to *K* resources;
   inference reference signal received quality (RSRQ) corresponding to *K* resources; or,
   inference signal to interference and noise ratio (SINR) corresponding to *K* resources;
   wherein *K* is a predefined or configured positive integer, and a value of *K* does not exceed a quantity of the second resource sets.

71. The apparatus of claim 68, wherein the first channel state information of the first resource set comprises at least one of the following:

   a channel estimation result obtained based on the at least one first resource set;

channel estimation result compression information obtained based on the at least one first resource set;
a channel estimation result and channel estimation result compression information obtained based on the at least one first resource set; or,
information for channel estimation or channel recovery corresponding to a resource in the first resource set.

72. The apparatus of claim 61, wherein the output information of the AI model comprised in the report information is quantized and/or encoded information.

73. A computer-readable storage medium storing a computer program that causes a computer to perform the method of any of claims 1 to 12, or perform the method of any of claims 13 to 24.

FIG. 1

Determining at least one first resource set and at least one AI model that having an association relationship with the at least one first resource set, where the first resource set is a measurement resource set
201

Determining report information based on the at least one first resource set and the at least one AI model, and transmitting the report information to a network device, where the report information includes part or all of output information of the at least one AI model
202

FIG. 2

*CSI-ReportConfig*

CSI-ResourceConfigId 0 = 3

AI Model ID 0 = 0
AI Model ID 1 = 5

CSI-ResourceConfig #3 ⟵ Associated ⟶ AI Model #0

AI Model #5

FIG. 3

Measurement resource set → AI model 0 → AI model 1 → AI model 2 →

FIG. 4

CSI-ResourceConfig #0 ⟶ AI Model #0 ⟶

CSI-ResourceConfig #1 ⟶ AI Model #5 ⟶

FIG. 5

FIG. 6

FIG. 7

FIG. 8

FIG. 9

Receiving report information transmitted from a terminal device, where the report information is determined based on at least one first resource set and at least one AI model, the at least one first resource set and the at least one AI model have an association relationship, the report information includes part or all of output information of the at least one AI model, and first resource set is a measurement resource set

1001

FIG. 10

FIG. 11

FIG. 12

1303

Processor

1301

Memory

Bus interface

1302

Transceiver

1304

User interface

FIG. 13

1403

Processor

1401

Memory

Bus interface

1402

Transceiver

FIG. 14

First determining unit 1501

Second determining unit 1502

FIG. 15

Receiving unit $\quad$ 1601

FIG. 16

## INTERNATIONAL SEARCH REPORT

| International application No. |
| --- |
| **PCT/CN2023/080434** |

| A. | CLASSIFICATION OF SUBJECT MATTER |
| --- | --- |

H04L 5/00(2006.01)i

According to International Patent Classification (IPC) or to both national classification and IPC

| B. | FIELDS SEARCHED |
| --- | --- |

Minimum documentation searched (classification system followed by classification symbols)

IPC:G06F,H04L

Documentation searched other than minimum documentation to the extent that such documents are included in the fields searched

Electronic data base consulted during the international search (name of data base and, where practicable, search terms used)

CNTXT, CNKI, DWPI, ENTXT, 3GPP: 测量, 检测, 监测, 反馈, 发送, 应答, 接收, 上报, 结果, 答复, 回应, 集合, 分组, 模型, 建模, 训练, 资源, 频带, AI, detect+, measur+, ACK, feedback, group, model, train, detect, monitor, transmit, answer, receive, report, result, answer, response, resource, band

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2022084457 A1 (TELEFONAKTIEBOLAGET LM ERICSSON (PUBL)) 28 April 2022 (2022-04-28) <br> description, paragraphs [0005]-[0229], and figures 9-12 | 1-73 |
| A | CN 112073129 A (CHENGDU HUAWEI TECHNOLOGIES CO., LTD.) 11 December 2020 (2020-12-11) <br> entire document | 1-73 |
| A | US 2020167259 A1 (ORACLE INTERNATIONAL CORPORATION) 28 May 2020 (2020-05-28) <br> entire document | 1-73 |
| A | WO 2021239238 A1 (TELEFONAKTIEBOLAGET LM ERICSSON (PUBL)) 02 December 2021 (2021-12-02) <br> entire document | 1-73 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **26 April 2023** | **09 May 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/080434**

| Patent document cited in search report | | | Publication date (day/month/year) | Patent family member(s) | | | Publication date (day/month/year) |
|---|---|---|---|---|---|---|---|
| WO | 2022084457 | A1 | 28 April 2022 | None | | | |
| CN | 112073129 | A | 11 December 2020 | WO | 2020248825 | A1 | 17 December 2020 |
| | | | | EP | 3952144 | A1 | 09 February 2022 |
| | | | | US | 2022077943 | A1 | 10 March 2022 |
| | | | | CN | 114826447 | A | 29 July 2022 |
| US | 2020167259 | A1 | 28 May 2020 | None | | | |
| WO | 2021239238 | A1 | 02 December 2021 | EP | 4158952 | A1 | 05 April 2023 |
| | | | | CN | 115669088 | A | 31 January 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022104746877